# EUROPEAN PATENT APPLICATION

(11) **EP 4 568 001 A1**
(43) Date of publication of application: **11.06.2025**
(21) Application number: 22958448.7
(22) Date of filing: 15.09.2022
(51) Int. Cl.: H01M 50/533

(54) **BATTERY CELL AND PREPARATION METHOD THEREFOR, BATTERY, AND ELECTRICAL DEVICE**

(71) Applicant: Contemporary Amperex Technology (Hong Kong) Limited, Central, Hong Kong (HK)
(72) Inventor: CHAI, Zhisheng, Ningde, Fujian 352100 (CN); SUN, Dongsheng, Ningde, Fujian 352100 (CN); JIN, Haizu, Ningde, Fujian 352100 (CN); LI, Baiqing, Ningde, Fujian 352100 (CN)
(74) Representative: Ran, Handong
(86) International application number: PCT/CN2022/119135
(87) International publication number: WO 2024/055256

(57) **Abstract**

The present application provides a battery cell and a manufacturing method therefor, a battery, and an electrical device. The battery cell comprises : a housing assembly, the housing assembly comprising an electrode lead-out part used for inputting or outputting electrical energy; an electrode assembly, the electrode assembly being accommodated in the housing assembly, the electrode assembly comprising a cylindrical main body and a tab protruding from an end of the main body, and the tab comprising a plurality of sub-tabs; and a current collecting member, accommodated in the housing assembly, the current collecting member comprising : a plurality of current collecting parts sequentially arranged at intervals along the circumferential direction of the current collecting member, and a flow guide part located between two adjacent current collecting parts; the current collecting parts extend along the radial direction of the current collecting member, the flow guide part is respectively connected to the two current collecting parts neighboring same, the current collecting part is used for being electrically connected to the electrode lead-out part, and the flow guide part is used for being electrically connected to at least one of the sub-tabs.

## Description

### TECHNICAL FIELD

The present application relates to the technical field of batteries, and particularly relates to a battery cell and a manufacturing method therefor, a battery, and an electrical device.

### BACKGROUND

A rechargeable battery cell, which may be called a secondary battery cell, refers to a battery cell that can be used continually by activating an active material by charging after the battery cell is discharged. Rechargeable battery cells are widely used in electronic devices such as mobile phones, laptops, electric scooters, electric vehicles, electric planes, electric ships, electric toy cars, electric toy ships, electric toy planes and electric tools.

Key components of battery cells include electrode assemblies and current collecting members, the structural forms and connection methods of which have a great impact on battery performance or safety issues.

### SUMMARY OF THE INVENTION

The present application is intended to solve at least one of the technical problems existing in electrode cells in the prior art. To this end, an objective of the present application is to provide a battery cell and a manufacturing method therefor, a battery, and an electrical device.

Embodiments in the first aspect of the present application provide a battery cell, including a shell assembly, an electrode assembly, and current collecting members, wherein the shell assembly includes electrode lead-out parts used to input or output electric energy; the electrode assembly is accommodated in the shell assembly, the electrode assembly includes a cylindrical main body part and tab parts protruding from an end of the main body part, and the tab parts include a plurality of sub-tabs; and the current collecting members are accommodated in the shell assembly, each current collecting member includes a plurality of converging portions sequentially arranged at intervals along the circumferential direction of the current collecting member and conducting portions positioned between every two adjacent converging portions, the converging portions extend along the radial direction of the current collecting member, the conducting portion is connected to its adjacent two converging portions, the converging portions are used to be electrically connected to the electrode lead-out part, and the conducting portions are used to be electrically connected to at least one of the sub-tabs.

With the battery cell provided by the embodiments of the present application, on the one hand, the structural strength of the entire current collecting members can be improved to avoid deformation or damage of the current collecting members under stress, so as to ensure the pass rate of connection of the current collecting members to the tab parts or the electrode lead-out parts. On the other hand, the conducting portions can be connected to the sub-tabs of the tab parts in different circumferential regions of the current collecting members, which can improve the connection area and the uniformity of distribution of the connected regions between the current collecting members and the tab parts. The conducting portions can be electrically connected to the electrode lead-out parts through the two converging portions adjacent to the conducting portions, thereby improving the uniformity and efficiency of conduction from the current collecting members to the electrode lead-out parts. Further, the current collecting members in the present embodiment can alleviate the problem of temperature rise of the battery cell due to excessive local current flow.

In some embodiments, the conducting portion includes avoidance grooves and sub-conducting portions alternately arranged along the radial direction of the current collecting member, the avoidance grooves and the sub-conducting portions extend along the circumferential direction of the current collecting member respectively, the two ends of every sub-conducting portion in the conducting portion are connected to the two converging portions adjacent to the conducting portion respectively, and the avoidance grooves are used to allow at least one sub-tab to pass through.

According to the present embodiment, on the one hand, the connection stability between the sub-tabs and the current collecting members can be improved, so as to reduce the risk of detachment between the tab parts and the current collecting members during the later use. On the other hand, uneven current conduction between the tab parts and the current collecting members can be reduced, the problem of temperature rise of the battery cell due to excessive local current flow can be alleviated, and the safety hazard of the battery cell in the later use process can be reduced. Further, the electrode assembly of the battery cell of such a structure does not need to use a structure in which the entire tab is flattened, thereby effectively alleviating the problems caused by flattening of the tab of the electrode assembly. Moreover, the efficiency of the entire current collecting members in conducting current to the electrode lead-out parts can be improved.

In some embodiments, the sub-tab passing through each avoidance groove is folded towards the sub-conducting portion adjacent to the avoidance groove and connected to the sub-conducting portion.

After being folded, the sub-tab passing through the avoidance groove can be close to a side of the sub-conducting portion away from the main body part of the electrode assembly, which facilitates the connection (especially, welding) between the sub-tab and the sub-conducting portion, and can increase the connection area, improve the current flow area, and alleviate the problem of temperature rise caused by excessive local current flow.

In some embodiments, the sub-tabs passing through from two adjacent avoidance grooves are connected to a sub-conducting portion between the two adjacent avoidance grooves respectively.

It can be understood that the sub-tabs passing through the two adjacent avoidance grooves sharing the one sub-conducting portion, is conducive to the connection of the sub-tabs to the current collecting members, especially when the number of the avoidance grooves in a conducting portion is greater than the number of the sub-conducting portions, and it can be ensured that the sub-tab passing through from each avoidance groove can be connected to the sub-conducting portion adjacent thereto.

In some embodiments, the sub-tabs passing through from different avoidance grooves are connected to different sub-conducting portions respectively.

It can be understood that each sub-conducting portion is only connected to the sub-tab passing through from one avoidance groove, which can improve the uniformity and efficiency of conduction, and further alleviate the problem of temperature rise caused by excessive local current flow.

In some embodiments, each conducting portion includes 3 to 5 avoidance grooves.

In the present embodiment, the number of the avoidance grooves is 3 to 5, which can not only facilitate the operation of connecting the sub-tabs to the current collecting member and improve the connection stability, but also ensure the conduction area and conduction uniformity, and alleviate the problem of temperature rise caused by excessive local current flow.

In some embodiments, the edge of each sub-conducting portion is provided with a folded edge on the side away from the main body part, and a portion of the sub-tab passing through the avoidance groove is connected to the folded edge.

In the present embodiment, the folded edges are arranged on the side of the sub-conducting portions away from the main body part of the electrode assembly. The folded edges may have a certain angle with the sub-conducting portions. The portions of the sub-tabs passing through the avoidance grooves are connected (e.g., welded) to the folded edges, which is more convenient in operation and is conducive to improving the connection efficiency and pass rate of connection of a tab to the current collecting member.

In some embodiments, the folded edge provided on each sub-conducting portion can be folded in a direction close to or away from the sub-conducting portion.

In the present embodiment, by arranging the folded edges at the edges of the sub-conducting portions, the sub-tabs can be bent along with the folded edges after being connected to the folded edges, to be close to the sub-conducting portions connected to the folded edges or close to other sub-conducting portions that are adjacent to but are not connected to the folded edges. Due to the support of the folded edges, the sub-tabs can be prevented from being damaged or broken under stress, the connection stability between the sub-tabs and the sub-conducting portions can be improved, and the current flow area between the current collecting member and a tab part can be ensured. Moreover, the stacked layers formed after the sub-tabs and the folded edges are folded and smoothed together are more uniform and denser, which is conducive to improving the conduction efficiency and conduction uniformity.

In some embodiments, the folded edges include a plurality of comb-tooth portions, and the width Hc of each comb-teeth portion and the diameter D of the current collecting member satisfy: 0.08≤Hc/D≤0.2.

In the present embodiment, the folded edges are arranged in a discontinuous structure, which on one hand, can reduce the strength of the folded edges to be conducive to the bending of the sub-tabs and the folded edges, and on the other hand, can effectively alleviate the problem of folds of the sub-tabs and the folded edges after bending, thereby ensuring the conduction area and conduction uniformity. Moreover, the width Hc of each comb-teeth portion and the diameter D of the current collecting member satisfy: 0.08≤Hc/D≤0.2, which can facilitate the operation of connecting the folded edges to the sub-tabs, facilitate the folding and smoothing of the folded edges and the sub-tabs, and be conducive to improving the reliability of the connection of the folded edges to the sub-tabs.

In some embodiments, the plurality of comb-tooth portions are equal in width. Thus, the operation of cutting the plurality of comb-tooth portions of the folded edges can be facilitated, and the consistency of connection of the comb-tooth portions to the sub-tabs is ensured, which is conducive to further improving the conduction area and conduction uniformity of a tab part and the current collecting member.

In some embodiments, the current collecting member includes a plurality of conducting portions, and the plurality of conducting portions are arranged along the circumferential direction of the current collecting member.

The conducting portions are used to be connected to the sub-tabs of the tab part. The plurality of conducting portions are arranged along the circumferential direction of the current collecting member, which is conducive to improving the conduction area and conduction uniformity between the current collecting member and the tab part.

In some embodiments, the plurality of converging portions and the plurality of conducting portions are alternately arranged along the circumferential direction of the current collecting member. Thus, on the one hand, the structural strength of the entire current collecting member can be improved, and on the other hand, the conduction uniformity and conduction efficiency of the entire current collecting member can be further improved.

In some embodiments, the projection of the inner wall of any one avoidance groove in one conducting portion and the projection of the inner wall of any one avoidance groove in another conducting portion are located on different circles; or the projection of the outer wall of any avoidance groove in one conducting portion and the projection of the outer wall of any avoidance groove in another conducting portion are located on different circles.

According to the present embodiment, it can be ensured that the sub-tabs passing through the avoidance grooves from the center to the edge of the current collecting member are evenly distributed, which makes the conduction between the current collecting member and the sub-tabs more uniform, improves the conduction efficiency, alleviates the problem of temperature rise caused by excessive local current flow in battery cells, and improves the safety performance of batteries.

In some embodiments, the circles where the projections of the inner walls of the avoidance grooves of the plurality of conducting portions are located are alternately arranged in sequence along the radial direction of the current collecting member; or, the circles where the projections of the outer walls of the avoidance grooves of the plurality of conducting portions are located are alternately arranged in sequence along the radial direction of the current collecting member.

In the present embodiment, the radii of the circles where the inner walls/outer walls of the avoidance grooves of the plurality of conducting portions are located are alternately arranged in order of size, so that the sub-tabs passing through the avoidance grooves are more uniformly distributed, and the conduction between the current collecting member and the sub-tabs is more uniform, thereby further improving the conduction efficiency, alleviating the problem of temperature rise caused by excessive local current flow in battery cells, and improving the safety performance of batteries.

In some embodiments, the radii of the circles where the projections of the inner walls of all the avoidance grooves in the current collecting member are located are arranged in ascending order, and based on the order, the increment of the radius corresponding to each avoidance groove relative to the radius corresponding to its previous avoidance groove gradually decreases; or, the radii of the circles where the projections of the outer walls of all the avoidance grooves in the current collecting member are located are arranged in ascending order, and based on the order, the increment of the radius corresponding to each avoidance groove relative to the radius corresponding to its previous avoidance groove gradually decreases.

In the present embodiment, the radius difference between two avoidance grooves adjacent in radius is gradually smaller in an order of radii from small to large, so that the distance between the avoidance grooves is gradually smaller from the center to the edge of the current collecting member, the sub-tabs of the electrode plate are more uniformly distributed, and the conduction between the current collecting member and the sub-tabs is more uniform, thereby further improving the conduction efficiency, alleviating the problem of temperature rise in battery cells caused by excessive local current flow, and improving the safety performance of batteries.

In some embodiments, the sub-tab passing through the avoidance groove at the innermost circle of the current collecting member is folded towards the outer circle, so as to be close to the sub-conducting portion adjacent to the avoidance groove at the innermost circle.

In the present embodiment, the avoidance groove and the sub-conducting portion at the innermost circle are close to the central area of the current collecting member. The sub-tab passing through the avoidance groove at the innermost circle is folded outward to avoid the interference between the sub-tab and the opening in the central area of the current collecting member, thereby avoiding affecting the wetting of the electrolyte. **In** addition, the sub-tab is prevented from interfering with the welding of the first connecting portion to the electrode lead-out part, and the sub-tab is prevented from being burned when the first connecting portion is welded to the electrode lead-out part, thereby avoiding a decrease in the current flow area.

In some embodiments, at least a portion of the sub-tab passes through the avoidance groove at the outermost circle of the current collecting member and is folded towards the inner circle, so as to be close to the sub-conducting portion adjacent to the avoidance groove at the outermost circle.

In the present embodiment, an avoidance groove is arranged at the outermost circle of the current collecting member, so that the sub-tab of the electrode plate on the circumference of the outer circle can pass through the avoidance groove at the outermost circle and be connected to the sub-conducting portion. Thus, it can be ensured that the electrode plate is provided with the sub-tab connected to the current collecting member on the circumference of the outer circle, thereby avoiding excessive polarization and resistance of the electrode plate, making the conduction between a tab part of the electrode plate and the current collecting member more uniform, and improving the conduction efficiency.

In some embodiments, the current collecting member includes a first connecting portion. The converging portions are electrically connected to the electrode lead-out part through the first connecting portion. The converging portions and the conducting portions are arranged around the first connecting portion.

The converging portions and the conducting portions are arranged on the outer peripheral side of the first connecting portion, which can facilitate the connection of the first connecting portion to the electrode lead-out part and assembly, and the structure is simple.

In some embodiments, one end of each converging portion is connected to the first connecting portion. The width v1 of the end of the converging portion connected to the first connecting portion and the width v2 of the end of the converging portion away from the first connecting portion satisfy: v1≥v2*0.3.

In the present embodiment, the current collecting member converges along the converging portions towards the first connecting portion in the central area. When the width v1 of the end of the converging portion connected to the first connecting portion and the width v2 of the end of the converging portion away from the first connecting portion satisfy v1≥v2*0.3, the width v1 of the end of the converging portion connected to the first connecting portion is sufficiently large, which can effectively improve the convergence efficiency.

In some embodiments, the shell assembly includes a shell, the shell is used to accommodate the electrode assembly, and the electrode lead-out part is arranged in a manner of protruding from the shell.

The electrode lead-out part that is at least partially protruding from the outside of the shell is arranged on the shell, which can facilitate the connection of the electrode lead-out part to the first connecting portion of the current collecting member, and also facilitate the input or output of electric energy through the electrode lead-out part.

In some embodiments, a current collecting member further includes a second connecting portion. The converging portions are electrically connected to the electrode lead-out part through the second connecting portion. The converging portions and the conducting portions are at least partially arranged on the inner peripheral side of the second connecting portion along the radial direction of the current collecting member.

The second connecting portion is arranged at the outer peripheral edge of the current collecting member, which can facilitate the connection of the second connecting portion to the electrode lead-out part (a part of the shell), facilitate the assembly, and ensure the connection area between the second connecting portion and the electrode lead-out part.

In some embodiments, the width v3 of the end of the converging portion connected to the second connecting portion and the width v4 of the end of the converging portion away from the second connecting portion satisfy v4≤v3*0.3.

In the present embodiment, the current collecting member converges along the converging portions towards the second connecting portion at the peripheral edge. When the width v3 of the end of the converging portion connected to the second connecting portion and the width v4 of the end of the converging portion away from the second connecting portion satisfy v4≤v3*0.3, the width v3 of the end of the converging portion connected to the second connecting portion is sufficiently large, which can effectively improve the convergence efficiency.

In some embodiments, the shell assembly includes a shell, the shell is used to accommodate the electrode assembly, and the electrode lead-out part is a part of the shell.

A part of the shell is used as the electrode lead-out part, which can facilitate the connection of the electrode lead-out part to the second connecting portion of the current collecting member, and can also facilitate the input or output of electric energy.

In some embodiments, the side of the first connecting portion away from the main body part protrudes from the conducting portions and the sub-tabs.

The side of the first connecting portion away from the main body part of the electrode assembly is raised so that the first connecting portion is higher than the portions of the sub-tabs passing through avoidance grooves. Thus, the sub-tabs can be prevented from affecting the connection of the first connecting portion to the electrode lead-out part, and the connection operation, e.g., welding operation, is facilitated.

In some embodiments, the thickness of the first connecting portion is greater than the thicknesses of the other portions of the current collecting member.

The thickness of the first connecting portion is greater than the thicknesses of the other portions, which can increase the current flow density between the first connecting portion and the electrode lead-out part, and further improves the conduction efficiency.

In some embodiments, the current collecting member is welded to the electrode lead-out part, and the weld mark is annular. The capacity C (Ah) of the battery cell satisfies: 15≤π*D1*t1/(C*K)≤50, where D1 is the diameter of the annular weld mark, t1 is the thickness of the welding area of the current collecting member, and K is the metal current carrying factor of the current collecting member.

In the present embodiment, when the capacity C (Ah) of the battery cell satisfies 15≤π*D1*t1/(C*K)≤50, a sufficient current flow capacity can be ensured, the battery capacity can be improved, and the problem of excessive internal resistance when the current collecting member converges towards the center can be avoided.

In some embodiments, the capacity C (Ah) of the battery cell satisfies: 19≤π*D1*t1/(C*K)≤40. Thus, the current flow capacity and the battery capacity can be better balanced, and the internal resistance when the current collecting member converges towards the center can be reduced.

In some embodiments, the number x of the converging portions satisfies: 3≤x≤5.

In the present embodiment, when the number x of the converging portions is 3 to 5, the conduction area and conduction uniformity can be ensured, and the strength of the entire current collecting member can be ensured, thereby ensuring the stability of connection among the current collecting member, a tab part, and the electrode lead-out part.

In some embodiments, the central angle ω corresponding to the arc length of each avoidance groove satisfies: 60°≤ω≤100°.

In the present embodiment, when 60°≤ω≤100°, a certain misalignment space can be reserved for the insertion operation between the sub-tabs and the current collecting member, which facilitates the passage of the sub-tabs. Also, the overall strength of the current collecting member is high, and the number and/or width of the converging portions can meet the conduction requirements and is conducive to improving the conduction efficiency.

In some embodiments, the ratio of the total length of the avoidance grooves of each conducting portion along the radial direction of the current collecting member to the radius of the current collecting member satisfies: ratio≤60%.

In the present embodiment, when ratio≤60%, the dimensional ratios of the avoidance grooves and the sub-conducting portions to the conducting portion are appropriate, which is conducive to ensuring the dimensions of the sub-conducting portions, facilitating the operation of connecting the sub-tabs to the sub-conducting portions, and ensuring the strength of the current collecting member.

In some embodiments, the minimum thickness t2 of the current collecting member and the diameter D of the current collecting member satisfy: 0.008≤t2/D≤0.02.

In the present embodiment, when the thickness t2 of the current collecting member and the diameter D of the current collecting member satisfy 0.008≤t2/D≤0.02, the hardness of the current collecting member can be ensured, the current collecting member can be prevented from deformation and poor welding when being welded to a tab part, and a large battery capacity can be achieved.

In some embodiments, the minimum thickness t2 of the current collecting member and the diameter D of the current collecting member satisfy: 0.0089≤t2/D≤0.0134. Thus, the thickness of the current collecting member and the battery capacity can be better balanced.

In some embodiments, the electrode assembly is of a wound structure formed by electrode plates and a separator. The electrode plate includes: a current collector substrate, an active material layer arranged on the surface of the current collector substrate, and a tab part connected to a side edge of the current collector substrate extending along a winding direction. The separator and the electrode plates except the tab parts form the main body part of the electrode assembly. dτ=(100 Ω·(mm)^2×b)/(ρ×a) is set; and along the winding direction, the distance d between any two sub-tabs in the electrode plate satisfies d≤dτ, where b is the thickness of the current collector substrate, ρ is the resistivity of the current collector substrate, and a is the width of the electrode plate.

In the present embodiment, when d≤dτ, the current flow capacity of the tab part can be improved, the internal resistance of the battery can be reduced, and the battery performance can be improved.

In some embodiments, the width of a sub-tab is w, and along the winding direction, the number of the sub-tabs of the electrode plate within any distance dτ is n, and the electrode plate satisfies: 0.05≤n*w/dτ≤0.5.

When n*w/dτ<0.05, the distribution area of the sub-tabs is small, the current flow capacity of the tab part is insufficient, and the temperature at the tab part and the internal resistance of the battery are too high. When n*w/dτ>0.5, the number or width of the sub-tabs is too large, and the difficulty is increased for manufacturing. If there is misalignment of the sub-tabs during winding, the sub-tabs easily interfere with the current collecting member, so that the sub-tabs cannot extend from the avoidance grooves, and safety problems such as folds and damage of tabs and insertion of the tabs are raised. In the present embodiment, the tab part of the electrode plate is designed to satisfy 0.05≤n*w/dτ≤0.5, which can avoid the above problems, improve the current flow capacity, reduce the internal resistance of the battery, and improve the battery performance.

Embodiments in the second aspect of the present application provide a method for manufacturing a battery cell, including: providing a shell assembly, wherein the shell assembly includes electrode lead-out parts used to input or output electric energy; providing an electrode assembly, wherein the electrode assembly includes a main body part and tab parts protruding from the main body part, and the tab parts include a plurality of sub-tabs; providing current collecting members, wherein each current collecting member includes a plurality of converging portions sequentially arranged at intervals along the circumferential direction of the current collecting member and the conducting portions positioned between every two adjacent converging portions, the converging portions extend along the radial direction of the current collecting member, the conducting portion is connected to its adjacent two converging portions, the converging portions are used to be electrically connected to the electrode lead-out part, and the conducting portions are used to be electrically connected to at least one of the sub-tabs; mounting the electrode assembly in the shell assembly; connecting the current collecting members to the tab parts; and connecting the electrode lead-out parts to the current collecting members.

The method for manufacturing a battery cell according to the embodiments of the present disclosure can, on the one hand, strengthen the structural strength of the entire current collecting member, avoid deformation or damage of the current collecting member under stress, ensure the pass rate of connection among the current collecting member, the tab part and the electrode lead-out part, ensure the reliability of the battery cell in use, and prolong the service life of the battery cell, and on the other hand, improve the uniformity and efficiency of conduction from the current collecting member to the electrode lead-out part, thereby alleviating the problem of temperature rise of the battery cell due to excessive local current flow, reducing the safety hazards of the battery cell in the later use process, and ensuring the safety of consumers. In addition, the manufacturing method can also improve the conduction efficiency and improve the battery performance.

In some embodiments, the conducting portion includes avoidance grooves and sub-conducting portions alternately arranged along the radial direction of the current collecting member, the avoidance grooves and the sub-conducting portions extend along the circumferential direction of the current collecting member respectively, the two ends of every sub-conducting portion in the conducting portion are connected to the two converging portions adjacent to the conducting portion respectively, and the avoidance grooves are used to allow at least one sub-tab to pass through. The edge of each sub-conducting portion is provided with a folded edge on the side away from the main body part. The step of connecting the current collecting members to the tab parts further includes: allowing the at least one sub-tab to pass through the avoidance groove and be welded to the folded edge, and folding the welded sub-tab and folded edge in a direction close to or away from the sub-conducting portion to which the folded edge is connected.

The arrangement of the folded edges can further facilitate the connection of the tab parts to the current collecting members, further improve the pass rate and reliability of connection, and improve the efficiency and uniformity of conduction.

Embodiments in the third aspect of the present application provide a battery, which includes the battery cell in the aforementioned embodiments.

Embodiments in the fourth aspect of the present application provide an electrical apparatus, which includes the battery in the aforementioned embodiments.

The above description is only an overview of the technical solution of the present application. In order to better understand the technical means of the present application and thus implement them according to the contents of the specification, and in order to make the aforementioned and other objectives, features and advantages of the present application more obvious and understandable, the following is the detailed description of the present application.

### DESCRIPTION OF DRAWINGS

In the drawings, unless otherwise specified, like reference numerals indicate like or similar parts or elements throughout multiple drawings. These drawings are not necessarily drawn to scale. It should be understood that these accompanying drawings depict only some embodiments disclosed according to the present application and should not be considered as limiting the scope of the present application.
FIG. 1 is a schematic structural diagram of some embodiments of an electrical apparatus according to the present disclosure.
FIG. 2 is an exploded structural view of a battery provided in some embodiments of the present application.
FIG. 3 is an exploded structural view of a battery cell provided in some embodiments of the present application.
FIG. 4 is a cross-sectional view of a battery cell provided in some embodiments of the present application.
FIG. 5 is a partial enlarged view of portion A of the battery cell shown in FIG. 4.
FIG. 6 is a schematic diagram of the connection of a current collecting member to a tab part of an electrode assembly of a battery cell provided in some embodiments of the present disclosure.
FIG. 7 is a schematic structural diagram of partial connection of a current collecting member to a sub-tab of a battery cell provided in some embodiments of the present disclosure.
FIG. 8 is a schematic structural diagram of a current collecting member of a battery cell provided according to other embodiments of the present disclosure.
FIG. 9 is a schematic structural diagram of a current collecting member of a battery cell provided according to other embodiments of the present disclosure.
FIG. 10 is a partial schematic structural diagram of a current collecting member of a battery cell provided according to other embodiments of the present disclosure.
FIG. 11 is a schematic structural diagram of a current collecting member of a battery cell provided according to other embodiments of the present disclosure.
FIG. 12 is a schematic structural diagram of a current collecting member of a battery cell provided according to other embodiments of the present disclosure.
FIG. 13 is a partial enlarged view of portion B of the battery cell 20 shown in FIG. 4.
FIG. 14 is cross-sectional schematic structural diagram of a current collecting member of a battery cell provided according to other embodiments of the present disclosure.
FIG. 15 is a schematic structural diagram of an electrode assembly a battery cell provided according to some embodiments of the present disclosure.
FIG. 16 is a schematic structural diagram of an electrode plate of a battery cell provided according to some embodiments of the present disclosure.
FIG. 17 is a flowchart of a method for manufacturing a battery cell provided according to some embodiments of the present disclosure.

### Description of reference numerals:

1000-Vehicle; 100-Battery; 10-Box body; 11-First portion; 12-Second portion;
20-Battery cell; 21-Shell assembly; 211-Case; 212-End cover; 213-Electrode terminal;
214-Insulating plastic; 22-Electrode assembly; 221-Main body part; 222-Tab part;
2221, 5221, 3221A, 3221B, 3221C, 9221, 3212-Sub-tab; 23-Current collecting member;
231, 431, 731, 831-Converging portion; 232-Conducting portion;
2321, 3321A, 3321B, 3321C, 4321, 5321, 6321, 7321, 8321-Sub-conducting portion;
2322, 3322A, 3322B, 3322 C, 4322, 5322, 6322, 7322-Avoidance groove;
4323, 5323-Folded edge; 4324-Comb-tooth portion; 733, 933-First connecting portion; 9330-Weld mark;
833-Second connecting portion; 321A, 321B-Electrode plate; 322-Separator; 3211-Current collector substrate;
200-Controller; 300-Motor.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of the present application.

Unless otherwise defined, all technical and scientific terms used herein have the same meanings as those commonly understood by those skilled in the art to which the present application pertains to. The terms used herein are for the purpose of describing specific embodiments only, and are not intended to limit the present application. The terms "include" and "have" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, "a plurality of" means two or more, unless otherwise explicitly and specifically defined.

Reference herein to "an embodiment" means that a particular feature, structure, or characteristic described in connection with the embodiment can be included in at least one embodiment of the present application. The appearance of the phrase in various places in the specification does not necessarily refer to the same embodiment, nor is it a separate or alternative embodiment that is mutually exclusive from other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two), and similarly, "a plurality of groups" refers to two or more (including two) groups, and "a plurality of sheets" refers to two or more (including two) sheets.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that apparatuses or elements indicated must have particular orientations, and be constructed and operated in the particular orientations, so that these terms are not construed as limiting the embodiments of the present application.

In the description of the embodiments of the present application, unless otherwise expressly specified and limited, the technical terms "mount", "join", "connect", "fix", and the like, should be understood in a broad sense, for example, which may be a fixed connection, a detachable connection, or an integral connection; a mechanical connection, or an electrical connection; a direct connection, an indirect connection through an intermediate medium, an internal communication of two elements, or interaction between two elements. For those of ordinary skill in the art, the specific meanings of the aforementioned terms in the embodiments of the present application can be understood according to specific situations.

Batteries have outstanding advantages such as high energy density, low environmental pollution, high power density, long service life, wide adaptability and small self-discharge coefficient, and are an important part in the development of new energy. A battery cell of a battery is assembled into an electrode assembly (bare battery cell) by winding or stacking a positive electrode plate, a negative electrode plate and a separator, and is placed in a shell, and then the shell is filled with an electrolyte. The separator may be made of PP (polypropylene), or PE (polyethylene), or the like. The battery cell works mainly by virtue of the movement of metal ions between the positive electrode plate and the negative electrode plate. With the continuous development of battery technology, higher requirements have been put forward for the quality and safety in use of batteries. Therefore, the safety performance of battery cells determines the safety of batteries during use.

The inventors have discovered that for a typical battery cell, an electrode assembly needs to be electrically connected to a case and an electrode terminal mounted on the case, so that the case and the electrode terminal serve as a negative output electrode and a positive output electrode of the battery cell. To facilitate electrical connection of a tab of the electrode assembly to the case or the electrode terminal, a current collecting member is typically arranged in the case, and the tab is of a fully flattened structure to achieve the electrical connection of the tab to the case or the electrode terminal through the current collecting member, thereby achieving the electrical connection of the electrode assembly to the case. However, the battery cell of the structure is prone to powder particles during the process of flattening the tabs, which may cause short circuit in the battery cell, and the tabs have the problems such as poor shaping and insufficient conduction area. On the other hand, the tab and the current collecting member have low stability and poor consistency in welding, easily causing desoldering between the tab and the current collecting member and uneven conduction between the tab and the current collecting member, causing temperature rise inside the battery cell, leading to greater safety hazards in the later use process of the battery cell, and being not conducive to the safety of consumers.

Based on the above considerations, to solve the problem that battery cells have great safety hazards in the later use process, which is not conducive to the safety of consumers, embodiments of the present disclosure provide an electrode assembly, a battery cell, a battery and an electrical device to improve the safety performance of batteries.

The battery cell in the embodiments of the present disclosure may include a lithium-ion secondary battery, a lithium-ion primary battery, a lithium-sulfur battery, a sodium lithium-ion battery, a sodium-ion battery, a magnesium-ion battery, or the like, which is not limited in the embodiments of the present disclosure. The battery cell may be in a cylindrical shape, a flat shape, a cuboid shape or other shapes, which is also not limited in the embodiments of the present application. The battery cell is a cylindrical cell, a prismatic cell or a pouch cell depending on the way of encapsulation, which is also not limited in the embodiments of the present application.

The battery cell of the embodiments of the present disclosure can be applied to various types of batteries. The battery can be used to supply power for an electrical device, such as a vehicle, for example, supplying power for control operations or driving propulsion for the vehicle. The battery may include a case and a battery module, the case is used to provide an accommodating space for the battery module, and the battery module is mounted in the case. The case may be made of a metal material. The battery module may include a plurality of battery cells that are connected in series, in parallel or in serial and parallel. The battery cell is the smallest unit constituting a battery. The battery cell includes an electrode assembly that can undergo an electrochemical reaction.

The battery of the embodiment of the present disclosure can be applied to various types of electrical apparatuses that use batteries. The electrical apparatuses may be mobile phones, portable devices, laptops, electric scooters, electric vehicles, ships, spacecrafts, electric toys, electric tools, or the like. For example, the spacecrafts include airplanes, rockets, space shuttles, spaceships, and the like. The electric toys include fixed or mobile electric toys, such as game consoles, electric vehicle toys, electric ship toys, and electric airplane toys. The electric tools include electric tools for metal cutting, electric tools for grinding, electric tools for assembling, and electric tools for railways, such as electric drills, electric grinders, electric wrenches, electric screwdrivers, electric hammers, electric impact drills, concrete vibrators, and electric planers. The aforementioned electrical apparatuses are not specially limited in the embodiments of the present disclosure.

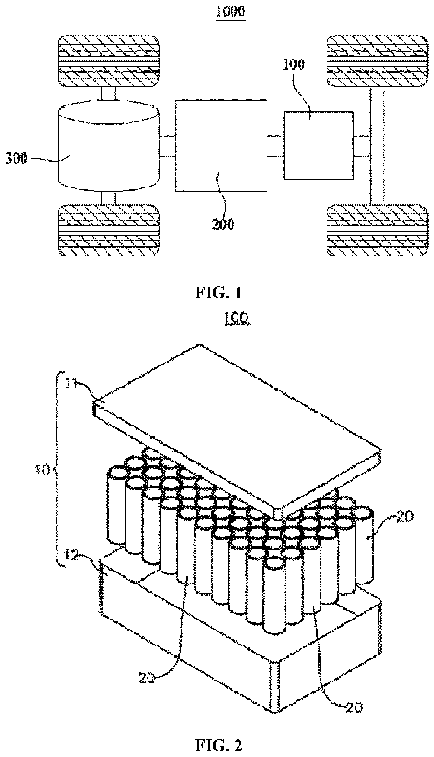

FIG. 1 is a schematic structural diagram of some embodiments of an electrical apparatus according to the present disclosure. For ease of explanation, the electrical apparatus being a vehicle is taken as an example. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is used to control the battery 100 to supply power to the motor 300, for example, to supply power for starting, navigation and driving of the vehicle 1000. In some embodiments of the present application, the battery 100 may not only be used as the operating power source for the vehicle 1000, but also as a driving power source for the vehicle 1000, to replace or partially replace fuel or natural gas to provide driving power for the vehicle 1000.

Referring to FIG. 2, FIG. 2 is a structural exploded view of the battery 100 provided in some embodiments of the present application. The battery 100 includes a box body 10 and battery cells 20, and the battery cells 20 are accommodated in the box body 10. The box body 10 is used to provide an accommodating space for the battery cells 20, and the box body 10 can be of a variety of structures. In some embodiments, the box body 10 may include a first portion 11 and a second portion 12, the first 20 portion 11 and the second portion 12 cover each other, and the first portion 11 and the second portion 12 together define an accommodating space for accommodating the battery cells 20. The second portion 12 may be of a hollow structure with an opening at one end, the first portion 11 may be of a plate-like structure, and the first portion 11 covers the opening side of the second portion 12 so that the first portion 11 and the second portion 12 together define the accommodating space. Also, the first portion 11 and the second portion 12 may each be of a hollow structure with an opening at one end, and the opening side of the first portion 11 covers the opening side of the second portion 12. Of course, the box body 10 formed by the first portion 11 and the second portion 12 may be of a variety of shapes, such as a cylinder or a cuboid.

In the battery 100, a plurality of battery cells 20 may be arranged, and the plurality of battery cells 20 may be connected in series, in parallel or in serial and parallel. The series-parallel connection means that the plurality of battery cells 20 are connected in both series and parallel. The plurality of battery cells 20 may be connected in series, in parallel or in serial and parallel, and then the whole formed by the plurality of battery cells 20 is accommodated in the box body 10. Of course, the battery 100 may also be in the form that the plurality of battery cells 20 are connected in series, in parallel or in serial and parallel to form battery modules, and then a plurality of battery modules are connected in series, in parallel or in serial and parallel to form a whole, which is accommodated in the box body 10. The battery 100 may further include other structures, for example, the battery 100 may further include a current converging component for achieving electrical connection between the plurality of battery cells 20.

Each battery cell 20 may be a secondary battery or a primary battery, and may be a lithium-sulfur battery, a sodium-ion battery, or a magnesium-ion battery, which 30 is not limited thereto. The battery cells 20 may be in a cylindrical shape, a flat shape, a cuboid shape or other shapes. Exemplarily, in FIG. 2, the battery cells 20 are in a cylindrical shape.

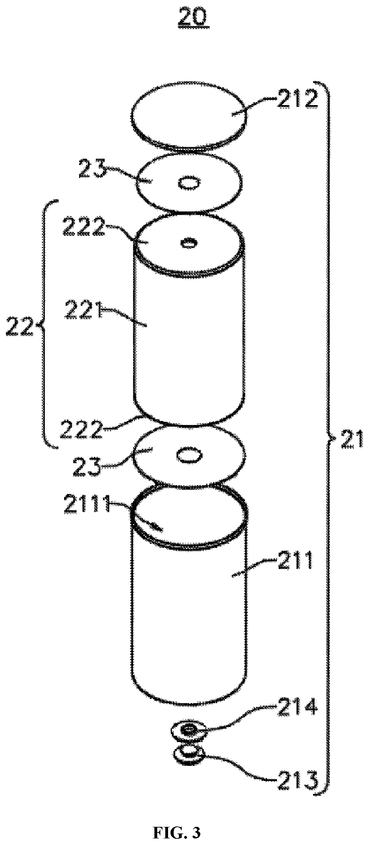

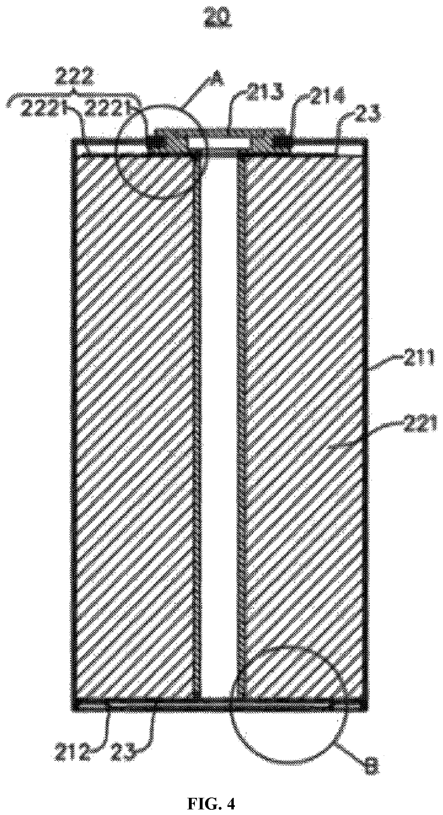

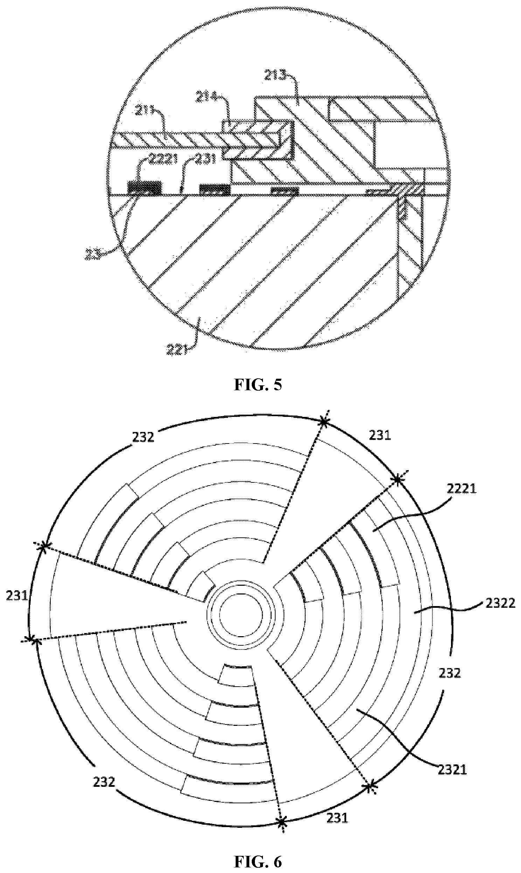

FIG. 3 is a structural exploded view of a battery cell 20 provided by some embodiments of the present application. FIG. 4 is a cross-sectional view of a battery cell 20 provided by some embodiments of the present application. FIG. 5 is a local enlarged view of point A of the battery cell 20 as shown in FIG. 4. FIG. 6 is a schematic diagram of the connection of a current collecting member to a tab part of an electrode assembly of a battery cell provided by some embodiments of the present application.

Referring to FIG. 3, FIG. 4, FIG. 5 and FIG. 6, according to some embodiments of the present application, a battery cell 20 includes a shell assembly 21, an electrode assembly 22, and current collecting members 23. The shell assembly 21 includes electrode lead-out parts used to input or output electric energy. The electrode assembly 22 is accommodated in the shell assembly 21, and the electrode assembly 22 includes a cylindrical main body part 221 and tab parts 222 protruding from an end of the main body part 221. The current collecting members 23 are accommodated in the shell assembly 21, and the current collecting members 23 are used to be connected to the electrode lead-out parts and the tab parts 222, so that the tab parts 222 are electrically connected to the electrode lead-out parts. The tab parts 222 include a plurality of sub-tabs 2221. The current collecting member 23 includes a plurality of converging portions 231 sequentially arranged at intervals along the circumferential direction of the current collecting member 23 and conducting portions 232 positioned between every two adjacent converging portions 231. The converging portions 231 extend along the radial direction of the current collecting member 23. The conducting portion 232 is connected to its adjacent two converging portions 231. The converging portions 231 are used to be electrically connected to the electrode lead-out part. The conducting portions are used to be electrically connected to at least one of the sub-tabs 2221.

As shown in FIG. 6, the circumferential direction of the current collecting members 23 is the circumferential direction with a point as the center of a circle, and the radial direction of the current collecting members 23 is the direction radiating from the point to the surroundings. Taking the current collecting members 23 being disc-shaped shown in FIG. 6 as an example, the radial direction of the current collecting members 23 is the direction from the center point of the current collecting members 23 to the edge of the current collecting members 23 or from the edge of the current collecting members 23 to the center point of the current collecting members 23; and the circumferential direction of the current collecting members 23 is the circumferential direction with the center point as the center of a circle. It should be noted that the current collecting members 23 are not limited to being disc-shaped, and may also be, for example, sector-shaped, which is not limited in the present embodiment.

As shown in FIG. 3, in some embodiments, the shell assembly 21 includes a shell. The shell may include a case 211 and an end cover 212. The case 211 is of a hollow structure with an opening on one side, and the end cover 212 covers the opening of the case 211 and forms a sealed connection to form a sealed space for accommodating the electrode assembly 22 and an electrolyte. When the battery cell 20 is assembled, the electrode assembly 22 may be placed in the case 211 first, the case 211 is filled with the electrolyte, and then the opening of the case 211 is covered with the end cover 212. The shell assembly 21 may further include an electrode terminal 213, and the electrode terminal 213 is mounted on the shell in an insulated manner and protrudes from the shell, that is, the electrode terminal 213 at least partially protrudes from the outside of the shell. For example, as shown in FIG. 6, the case 211 includes a bottom wall and a side wall, and the electrode terminal 213 is mounted on the bottom wall of the case 211 in a protruding manner. Of course, the electrode terminal 213 is not limited to being positioned on the case 211. For example, in other embodiments, the electrode terminal 213 may also be connected onto the end cover 212.

It can be understood that the shell assembly 21 is not limited to the above structure, and the shell assembly 21 may also be of other structures. For example, the shell assembly 21 includes a case 211 and two end covers 212, the case 211 is of a hollow structure with openings on two opposite sides, and each end cover 212 correspondingly covers each opening of the case 211 and forms a sealed connection to form a sealed space for accommodating the electrode assembly 22 and the electrolyte.

In the present embodiment, the electrode assembly 22 is provided with a positive tab part and a negative tab part for inputting or outputting electric energy, for achieving the power supply function of the battery cell 20. The current collecting members 23 are components for connecting the tab parts 222 of the electrode assembly 22 to the electrode lead-out parts to achieve electrical connection of the tab parts 222 to the electrode lead-out parts.

The electrode assembly 22 is a component of the battery cell 20 where an electrochemical reaction occurs. The electrode assembly 22 may include a positive electrode plate, a negative electrode plate, and a separator. The electrode assembly 22 may be of a wound structure formed by winding the positive electrode plate, the separator, and the negative electrode plate.

The battery cell 20 may be of a variety of forms. Exemplarily, in FIG. 3, the battery cell 20 includes two current collecting members 23. Correspondingly, both ends of a main body part 221 of the electrode assembly 22 are provided with the tab parts 222, which are respectively a positive tab part and a negative tab part. That is, the tab parts 222 at both ends of the main body part 221 are respectively connected to a positive electrode current collector of the positive electrode plate and a negative electrode current collector of the negative electrode plate, so that the tab parts 222 at both ends of the main body part 221 can output positive electrode electric energy and negative electrode electric energy of the electrode assembly 22 respectively. The shell assembly 21 includes two electrode lead-out parts, and the two electrode lead-out parts are respectively used to input or output the positive electrode electric energy and the negative electrode electric energy of the battery cell 20 respectively. The electrode lead-out parts may be the shell, e.g., the case 211 or the end cover 212, and may also be the electrode terminal 213 connected onto the shell. Each current collecting member 23 is used to be electrically connected to one tab part 222 and one electrode lead-out part. Of course, in other embodiments, the battery cell 20 may also include only one current collecting member 23, and the current collecting member 23 may be connected between a tab part 222 of a positive electrode plate and an electrode lead-out part that is used to transmit the positive electrode electric energy, to achieve electrical connection of the tab part 222 of the positive electrode plate to the electrode lead-out part that is used to transmit the positive electrode electric energy; or the current collecting member 23 may be connected between a tab part 222 of a negative electrode plate and an electrode lead-out part that is used to transmit the negative electrode electric energy, to achieve electrical connection of the tab part 222 of the negative electrode plate to the electrode lead-out part that is used to transmit the negative electrode electric energy.

In the present embodiment, the current collecting member 23 includes a plurality of converging portions 231 sequentially arranged at intervals along the circumferential direction of the current collecting member 23 and conducting portions 232 positioned between every two adjacent converging portions 231. The converging portions 231 extend along the radial direction of the current collecting member 23. The conducting portion 232 is connected to its adjacent two converging portions 231. The converging portions 231 are used to be electrically connected to the electrode lead-out part. The conducting portions are used to be electrically connected to the sub-tabs 2221. Thus, on the one hand, the structural strength of the entire current collecting members 23 can be improved to avoid deformation or damage of the current collecting members 23 under stress, so as to ensure the pass rate of connection of the current collecting members 23 to the tab parts 222 or the electrode lead-out parts. On the other hand, the conducting portions 232 can be connected to the sub-tabs 2221 of the tab parts 222 in different circumferential regions of the current collecting members 23, which can improve the connection area and the uniformity of distribution of the connected regions between the current collecting members 23 and the tab parts 222. The conducting portions 232 can be electrically connected to the electrode lead-out parts through the two converging portions 231 adjacent to the conducting portions 232, thereby improving the uniformity and efficiency of conduction from the current collecting members 23 to the electrode lead-out parts. Further, the current collecting members 23 in the present embodiment can alleviate the problem of temperature rise of the battery cell 20 due to excessive local current flow. In summary, according to the present embodiment, the battery performance of the battery cell can be improved and safety problems can be avoided.

According to some embodiments of the present application, as shown in FIG. 6, the conducting portion 232 includes avoidance grooves 2322 and sub-conducting portions 2321 alternately arranged along the radial direction of the current collecting member 23. The avoidance grooves 2322 and the sub-conducting portions 2321 extend along the circumferential direction of the current collecting member 23 respectively. The avoidance grooves 2322 and the sub-conducting portions 2321 are of an arc structure respectively. The two ends of every sub-conducting portion 2321 in the conducting portion 232 are connected to the two converging portions 231 adjacent to the conducting portion 232 respectively. The avoidance grooves 2322 are used to allow at least one sub-tab 2221 to pass through.

The sub-tab 2221 is connected to the current collecting members 23 after passing through the current collecting members 23 through the avoidance grooves 2322. The sub-tabs 2221 and the current collecting members 23 may be welded to each other or may be in contact with each other.

Exemplarily, the sub-tabs 2221 are welded to a side of the current collecting members 23 away from the main body part 221. For example, the sub-tabs 2221 pass through the avoidance grooves 2322 and are welded to the adjacent sub-conducting portions 2321.

It can be understood that a plurality of sub-tabs 2221 extending along the circumferential direction of the current collecting member 23 are formed at one end of the electrode assembly 22, and the plurality of sub-tabs 2221 are distributed at different circles of the current collecting members 23 along the radial direction of the current collecting member 23. In the present embodiment, each avoidance groove 2322 can allow one sub-tab 2221 to pass through, or can also allow a plurality of sub-tabs 2221 arranged in a stacked manner to pass through. That is, one or a plurality of sub-tabs 2221 can pass through each avoidance groove 2322, and each sub-tab 2221 can be connected to the current collecting members 23 after passing through the avoidance groove 2322.

The electrode assembly 22 is provided with the main body part 221 and the tab parts 222 protruding from the main body part 221, the tab parts 222 include the plurality of sub-tabs 2221, and the current collecting members 23 include the plurality of avoidance grooves 2322. By passing each sub-tab 2221 through one of the avoidance grooves 2322 of the current collecting members 23, and connecting the sub-tab 2221 to the current collecting members 23 after passing through the current collecting members 23, the battery cell 20 of such a structure is conducive to improving the connection stability between the sub-tabs 2221 and the current collecting members 23, so as to reduce the risk of detachment between the tab parts 222 and the current collecting members 23 during the later use, ensure the reliability of the battery cell 20 in use, and prolong the service life of the battery cell 20. On the other hand, the sub-tabs 221 can be connected to the current collecting members 23 conveniently during the production process, which is conducive to improving the consistency of the connection of the plurality of sub-tabs 2221 to the current collecting members 23, reducing uneven conduction between the tab parts 222 and the current collecting members 23, alleviating the problem of temperature rise of the battery cell 20 due to excessive local current flow, reducing the safety hazard of the battery cell 20 in the later use process, and ensuring the safety of consumers. Furthermore, the electrode assembly 22 of the battery cell 20 of such a structure does not need to use a structure in which the entire tab is flattened, thereby effectively alleviating the problem of short circuit in the battery cell 20 caused by powder particles generated during the process of flattening the tabs of the electrode assembly 22, and avoiding the problems of poor shaping and insufficient conduction area of the flattened tab parts 222.

In addition, after passing through the avoidance grooves 2322, the sub-tabs 2221 can be connected to any of the adjacent inner sub-conducting portions 2321 or outer sub-conducting portions 2321, and each sub-conducting portion 2321 can be connected to the electrode lead-out parts through two converging portions 231 connected to the left and right sides thereof, which is conducive to improving the efficiency of the entire current collecting members 23 in conducting current to the electrode lead-out parts.

According to some embodiments of the present application, as shown in FIG. 6, the sub-tab 2221 passing through each avoidance groove 2322 is folded towards the sub-conducting portion 2321 adjacent to the avoidance groove 2322 and connected to the sub-conducting portion 2321.

For example, the sub-tab 2221 is folded inward after passing through the avoidance groove 2322 to be connected to the adjacent inner sub-conducting portion 2321, so that the electrode assembly 22 is electrically connected to the current collecting member 23, and conduction between the electrode assembly 22 and the current collecting members 23 is achieved. Or, the sub-tab 2221 is folded outward after passing through the avoidance groove 2322 to be connected to the adjacent outer sub-conducting portion 2321, so that the electrode assembly 22 is electrically connected to the current collecting member 23, and conduction between the electrode assembly 22 and the current collecting members 23 is achieved.

After being folded, the sub-tab passing through the avoidance groove can be close to a side of the sub-conducting portion away from the main body part of the electrode assembly, which facilitates the connection (especially, welding) between the sub-tab and the sub-conducting portion, and can increase the connection area, improve the current flow area, and alleviate the problem of temperature rise caused by excessive local current flow.

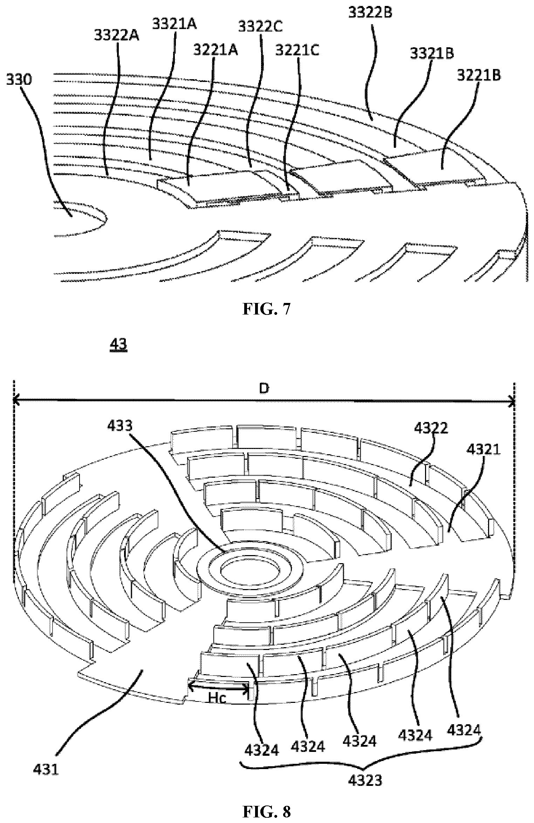

FIG. 7 is a partial schematic structural diagram of the connection of the current collecting member to the sub-tabs of the electrode assembly of a battery cell provided by some embodiments of the present application.

According to some embodiments of the present application, the sub-tabs passing through from two adjacent avoidance grooves are connected to a sub-conducting portion between the two adjacent avoidance grooves respectively. In other words, the sub-tabs passing through from two adjacent avoidance grooves can share one sub-conducting portion between the two adjacent avoidance grooves and be both connected to the one conducting portion.

Taking FIG. 7 as an example, an avoidance groove 3322A and an avoidance groove 3322C are adjacent, and a sub-tab 3221A passing through from the avoidance groove 3322A and a sub-tab 3221C passing through from the avoidance groove 3322C are both connected to a sub-conducting portion 3321A therebetween, i.e., share the sub-conducting portion 3321A.

It can be understood that the sub-tabs passing through the two adjacent avoidance grooves sharing the one sub-conducting portion, is conducive to the connection of the sub-tabs to the current collecting members, especially when the number of the avoidance grooves in a conducting portion is greater than the number of the sub-conducting portions, and it can be ensured that the sub-tab passing through from each avoidance groove can be connected to the sub-conducting portion adjacent thereto.

According to some embodiments of the present application, taking FIG. 6 as an example, the sub-tabs 2221 passing through from different avoidance grooves 2322 are connected to different sub-conducting portions 2321 respectively. In other words, each sub-conducting portion 2221 is only used to be connected to the sub-tab 2221 passing through from one avoidance groove 2322.

It can be understood that each sub-conducting portion is only connected to the sub-tab passing through from one avoidance groove, which can improve the uniformity and efficiency of conduction, and further alleviate the problem of temperature rise caused by excessive local current flow.

According to some embodiments of the present application, taking the current collecting member 23 shown in FIG. 6 as an example, each conducting portion 232 may include 3 to 5 avoidance grooves 2322.

Exemplarily, each conducting portion 232 further includes 3 to 5 sub-conducting portions 2321.

It should be noted that the number of avoidance grooves 2322 and the number of sub-conducting portions 2321 of each conducting portion 232 in the current collecting member 23 may be the same or different. For example, one conducting portion 232 may include four avoidance grooves 2322 and three sub-conducting portions 2321, and another conducting portion 232 may include three avoidance grooves 2322 and four sub-conducting portions 2321. Of course, in other embodiments, the number of the avoidance grooves and the number of the sub-conducting portions may also be 2, 5, 6, or the like.

When being greater than 5, the number of the avoidance grooves is too large, which will cause the avoidance grooves and the sub-conducting portions to have smaller dimensions along the radial direction of the current collecting member, be not conducive to the sub-tabs passing through the avoidance grooves and the connection of the sub-tabs to the sub-conducting portions, be prone to cause a small contact area between the sub-tabs and the sub-conducting portions, and further result in insufficient conduction area and poor connection stability between the tab parts and the current collecting member. When being less than 3, the number of the avoidance grooves is too small, which will easily cause a small number of sub-tabs passing through from the avoidance grooves and connected to the sub-conducting portions, and result in insufficient conduction area and poor conduction uniformity of the overall current collecting member. In the present embodiment, the number of the avoidance grooves is 3 to 5, which can not only facilitate the operation of connecting the sub-tabs to the current collecting member and improve the connection stability, but also ensure the conduction area and conduction uniformity, and alleviate the problem of temperature rise caused by excessive local current flow.

FIG. 8 is a schematic structural diagram of a current collecting member 43 of a battery cell provided according to other embodiments according to the present disclosure. Referring to FIG. 8, according to some embodiments of the present application, the edge of each sub-conducting portion 4321 is provided with a folded edge 4323 on the side away from the main body part of the electrode assembly, and the portions of sub-tabs passing through avoidance grooves 4322 is connected to the folded edges 4323. Exemplarily, the portions of the sub-tabs passing through the avoidance grooves 4322 are welded to the folded edges 4323.

The current collecting member 43 has a side close to the main body part of the electrode assembly and a side away from the main body part of the electrode assembly. The folded edges 4323 are arranged on the side of the sub-conducting portions 4321 of the current collecting member 43 away from the main body part, so as to be connected to the portions of the sub-tabs passing through the avoidance grooves 4322. The sub-conducting portions 4321 are of an arc-shaped structure extending along the circumferential direction of the current collecting member 43, and have inner edges close to the center of the current collecting member 43 and outer edges away from the center of the current collecting member 43. The folded edges 4323 are arranged on the edges of the sub-conducting portions 4321 and extend along the circumferential direction of the current collecting member 43 along the edges of the sub-conducting portions 4321.

In some embodiments, the folded edges 4323 may be arranged on the inner edges of the sub-conducting portions 4321. In other embodiments, the folded edges may also be arranged on the outer edges of the sub-conducting portions. Or, the folded edges 4323 may also be arranged on both the inner edges and the outer edges of the sub-conducting portions 4321. Specific arrangement may be made as needed.

In the present embodiment, the folded edges are arranged on the side of the sub-conducting portions away from the main body part of the electrode assembly. The folded edges may have a certain angle with the sub-conducting portions. The portions of the sub-tabs passing through the avoidance grooves are connected (e.g., welded) to the folded edges, which is more convenient in operation and is conducive to improving the connection efficiency and pass rate of connection of a tab to the current collecting member. For example, as shown in FIG. 8, the folded edges 4323 are roughly perpendicular to the sub-conducting portions 4321, and the portions of the sub-tabs passing through the avoidance grooves 4322 are roughly parallel to the folded edges. Thus, the operation of welding the sub-tabs to the folded edges is simple and convenient, which is conducive to improving the welding pass rate and welding efficiency and also increasing the welding area.

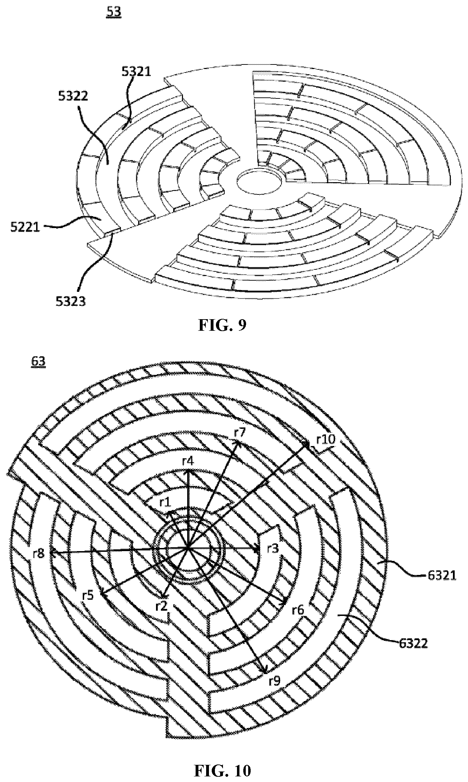

FIG. 9 is a schematic structural diagram of a current collecting member 53 of a battery cell provided according to other embodiments according to the present disclosure. Referring to FIG. 9, according to some embodiments of the present application, the folded edge 5323 provided on each sub-conducting portion 5321 can be folded in a direction close to or away from the sub-conducting portion 5321.

For example, as shown in FIG. 9, the folded edges 5323 are arranged at the outer edges of the sub-conducting portions 5321, and the folded edges 5323 and the sub-tabs 5221 connected thereto are bent inward to be close to the sub-conducting portions 5321 where the folded edges 5323 are arranged. Or, in other embodiments, the folded edges 5323 and the sub-tabs 5221 connected thereto may also be bent outward to be close to other sub-conducting portions 5321 that are adjacent to but are not connected to the folded edges 5323.

Under normal circumstances, after passing through the avoidance grooves, the sub-tabs can be bent along the radial direction of the current collecting member towards the inner sub-conducting portions and then welded to the inner sub-conducting portions, or the sub-tabs can be bent along the radial direction of the current collecting member towards the outer sub-conducting portions and then welded to the outer sub-conducting portions. In the present embodiment, by arranging the folded edges at the edges of the sub-conducting portions, the sub-tabs can be bent along with the folded edges after being connected to the folded edges, to be close to the sub-conducting portions connected to the folded edges or close to other sub-conducting portions that are adjacent to but are not connected to the folded edges. Due to the support of the folded edges, the sub-tabs can be prevented from being damaged or broken under stress, the connection stability between the sub-tabs and the sub-conducting portions can be improved, and the current flow area between the current collecting member and a tab part can be ensured. Moreover, the stacked layers formed after the sub-tabs and the folded edges are folded and smoothed together are more uniform and denser, which is conducive to improving the conduction efficiency and conduction uniformity.

As shown in FIG. 8, according to some embodiments of the present application, the folded edges 4323 include a plurality of comb-tooth portions 4324, that is, the folded edges 4323 are of a discontinuous structure extending along the circumferential direction of the current collecting member 43, and each folded edge 4323 is divided into a plurality of portions, each of which is a comb-tooth portion 4324.

Exemplarily, as shown in FIG. 8, the width Hc of each comb-tooth portion 4324 and the diameter D of the current collecting member 43 satisfy: 0.08≤Hc/D≤0.2, and the width Hc of the comb-tooth portion 4324 reflects the dimension of the comb-tooth portion 4324 along the circumferential direction of the current collecting member 43.

In the present embodiment, the folded edges are used to be connected with the sub-tabs and folded together with the sub-tabs. The folded edges are arranged in a discontinuous structure, which on one hand, can reduce the strength of the folded edges to be conducive to the bending of the sub-tabs and the folded edges, and on the other hand, can effectively alleviate the problem of folds of the sub-tabs and the folded edges after bending, thereby ensuring the conduction area and conduction uniformity. In addition, if Hc/D≤0.08, the width of each tooth portion is too small, which is not conducive to the operation of connecting the folded edges to the sub-tabs. If Hc/D≥0.2, the width of each tooth portion is too large, which is not conducive to the folding and smoothing of the folded edges and the sub-tabs. In the present embodiment, when 0.08≤Hc/D≤0.2, the operation of connecting the folded edges to the sub-tabs can be facilitated, the folding and smoothing of the folded edges and the sub-tabs can be facilitated, and the reliability of the connection of the folded edges to the sub-tabs can be improved.

According to some embodiments of the present application, as shown in FIG. 8, the plurality of comb-tooth portions 4324 are equal in width.

According to the present embodiment, the operation of cutting the plurality of comb-tooth portions of the folded edges can be facilitated, and the consistency of connection of the comb-tooth portions to the sub-tabs is ensured, which is conducive to further improving the conduction area and conduction uniformity of a tab part and the current collecting member.

For example, the sub-tabs may include a plurality of tab segments of equal width, and the folded edges are spaced into a plurality of comb-tooth portions of equal width. The plurality of tab segments can be welded to the plurality of comb-tooth portions of the folded edges respectively and then folded and smoothed, which is conducive to the operation of connecting the folded edges to a tab part and conducive to the pass rate of the folding and smoothing operation, and can further alleviate the problem of folds of the sub-tabs and the folded edges after bending, thereby further improving the conduction area and conduction uniformity.

According to some embodiments of the present application, taking FIG. 6 as an example, the current collecting member includes a plurality of conducting portions 232, and the plurality of conducting portions 232 are arranged along the circumferential direction of the current collecting member.

The conducting portions 232 are used to be connected to the sub-tabs 2221 of the tab part. The plurality of conducting portions 232 are arranged along the circumferential direction of the current collecting member, which is conducive to improving the conduction area and conduction uniformity between the current collecting member and the tab part.

According to some embodiments of the present application, taking FIG. 6 as an example, the plurality of converging portions 231 and the plurality of conducting portions 232 of the current collecting member 23 are alternately arranged along the circumferential direction of the current collecting member. For example, in some embodiments, the plurality of converging portions 231 and the plurality of conducting portions 232 are alternately arranged along the circumferential direction of the current collecting member to form a disc shape, each conducting portion 232 is connected to two adjacent converging portions 231, and each converging portion 231 is connected to two adjacent conducting portions 232. Thus, on the one hand, the structural strength of the entire current collecting member can be improved, and on the other hand, the conduction uniformity and conduction efficiency of the entire current collecting member can be further improved.

FIG. 10 is a schematic structural diagram of a current collecting member 63 of a battery cell provided according to some embodiments of the present disclosure.

According to some embodiments of the present application, referring to FIG. 10, in the current collecting member 63, the avoidance grooves 6322 are of an arc-shaped groove structure extending along the circumferential direction of the current collecting member 63, and the projection of the inner wall of any one avoidance groove 6322 in one conducting portion and the projection of the inner wall of any one avoidance groove 6322 in another conducting portion are located on different circles. Or, the projection of the outer wall of any avoidance groove 6322 in one conducting portion and the projection of the outer wall of any avoidance groove 6322 in another conducting portion are located on different circles.

It can be understood that the current collecting member 63 is of a flat structure having two opposite surfaces. The avoidance grooves 6322 are arc-shaped grooves extending along the circumferential direction of the current collecting member 63, and have inner arc-shaped walls and outer arc-shaped walls. The projections of the inner walls of the avoidance grooves 6322 are orthographic projections of the inner arc-shaped walls on the plane where a surface of the current collecting member 63 is located, and the projections of the outer walls of the avoidance grooves 6322 are the orthographic projections of the outer arc-shaped walls on the plane where a surface of the current collecting member is located.

According to the present embodiment, the current collecting member 63 includes a plurality of conducting portions 632, and the edge of any one avoidance groove 6322 in each conducting portion 632 and the corresponding edge of any one avoidance groove 6322 in another conducting portion 632 are located on different circles. That is, in the circumferential direction of the current collecting member 63, each avoidance groove 6322 is staggered with other avoidance grooves 6322. That is, when each avoidance groove 6322 extends along the circumferential direction of the current collecting member 63, there is no corresponding avoidance groove 6322 overlapping therewith.

According to the present embodiment, it can be ensured that the sub-tabs passing through the avoidance grooves 6322 from the center to the edge of the current collecting member 63 are evenly distributed, which makes the conduction between the current collecting member 63 and the sub-tabs more uniform, improves the conduction efficiency, alleviates the problem of temperature rise caused by excessive local current flow in battery cells, and improves the safety performance of batteries.

According to some embodiments of the present application, the circles where the projections of the inner walls of the avoidance grooves 6322 of the plurality of conducting portions are located are alternately arranged in sequence along the radial direction of the current collecting member 63. Or, the circles where the projections of the outer walls of the avoidance grooves 6322 of the plurality of conducting portions are located are alternately arranged in sequence along the radial direction of the current collecting member 63. In other words, the radii of the circles where the edges of the avoidance grooves 6322 of the plurality of conducting portions are located are alternately arranged in order of size.

For example, as shown in FIG. 10, the electrode assembly includes three conducting portions, wherein the first conducting portion includes four avoidance grooves 6322, and the radii of the circles where the inner walls of the four avoidance grooves 6322 are located are r1, r4, r7, and r10 respectively; the second conducting portion includes three avoidance grooves 6322, and the radii of the circles where the inner walls of the three avoidance grooves 6322 are located are r2, r5, and r8 respectively; the third conducting portion includes three avoidance grooves 6322, and the radii of the circles where the inner walls of the three avoidance grooves 6322 are located are r3, r6, and r9 respectively; the radii of the circles where the inner walls of all the avoidance grooves 6322 are located are in an order of r1<r2<r3<r4<r5<r6<r7<r8<r9<r10, and the corresponding avoidance grooves 6322 are arranged in the following order: the avoidance groove 6322 of the first conducting portion, the avoidance groove 6322 of the second conducting portion, the avoidance groove 6322 of the third conducting portion, the avoidance groove 6322 of the first conducting portion, the avoidance groove 6322 of the second conducting portion, the avoidance groove 6322 of the third conducting portion, and so on, that is, the radii of the circles where the inner walls of the avoidance grooves 6322 of the three conducting portions are located are alternately arranged in sequence.

In the present embodiment, the radii of the circles where the inner walls/outer walls of the avoidance grooves of the plurality of conducting portions are located are alternately arranged in sequence, so that the sub-tabs passing through the avoidance grooves are more uniformly distributed, and the conduction between the current collecting member and the sub-tabs is more uniform, thereby further improving the conduction efficiency, alleviating the problem of temperature rise caused by excessive local current flow in battery cells, and effectively improving the safety performance of batteries.

As shown in FIG. 10, according to some embodiments of the present application, the radii of the circles where the projections of the inner walls of all the avoidance grooves 6322 in the current collecting member 63 are located are arranged in ascending order, and based on the order, the increment of the radius corresponding to each avoidance groove 6322 relative to the radius corresponding to its previous avoidance groove 6322 gradually decreases. Or, the radii of the circles where the projections of the outer walls of all the avoidance grooves 6322 in the current collecting member are located are arranged in ascending order, and based on the order, the increment of the radius corresponding to each avoidance groove 6322 relative to the radius corresponding to its previous avoidance groove 6322 gradually decreases.

For example, as shown in FIG. 10, the current collecting member 63 includes 8 avoidance grooves 6322, and the radii of the circles where the projections of the inner walls of the 8 avoidance grooves 6322 are located are r1, r2, r3, r4, r5, r6, r7, r8, r9, and r10 in an order from small to large. The increase in the radius of the circle where the inner wall of each avoidance groove 6322 is located relative to the radius of the circle where the inner wall of the previous avoidance groove 6322 is located reflects the radius difference between two avoidance grooves 6322 adjacent in radius. For example, the increase in r2 relative to r1 is equal to r2-r1, and the increase in r3 relative to r2 is equal to r3-r2. According to the present embodiment, r10-r9≤r9-r8≤r8-r7≤r7-r6≤r6-r5≤r5-r4≤r4-r3≤r3-r2≤r2-r1.

In the present embodiment, the radius difference between two avoidance grooves 6322 adjacent in radius is gradually smaller in an order of radii from small to large, so that the distance between the avoidance grooves 6322 is gradually smaller from the center to the edge of the current collecting member 63, the sub-tabs of the electrode plate are more uniformly distributed, and the conduction between the current collecting member 63 and the sub-tabs is more uniform, thereby further improving the conduction efficiency, alleviating the problem of temperature rise in battery cells caused by excessive local current flow, and improving the safety performance of batteries.

As shown in FIG. 7, according to some embodiments of the present application, the sub-tab 3221A passing through the avoidance groove 3322A at the innermost circle of the current collecting member is folded towards the outer circle, so as to be close to the sub-conducting portion 3321A adjacent to the avoidance groove 3322A at the innermost circle.

The avoidance groove 3322A at the innermost circle refers to the avoidance groove with the smallest radius of the circle where the avoidance groove is located along the radial direction of the current collecting member, and may also be referred to as the avoidance groove closest to the center of the current collecting member. Folding towards the outer circle means bending towards the outer peripheral edge direction of the current collecting member.

Exemplarily, after passing through the avoidance groove 3322A at the innermost circle and being folded, the sub-tab 3221A can be directly connected to the adjacent sub-conducting portion 3321A, e.g., by welding.

Or, in some embodiments, the sub-conducting portion 3321A adjacent to the avoidance groove 3322A at the innermost circle may be provided with a folded edge at the inner edge, and the sub-tab 3221A is welded to the folded edge after passing through the avoidance groove 3322A at the innermost circle, and is folded towards the outer circle together with the folded edge, so as to fit onto the sub-conducting portion 3321A where the folded edge is located.

As shown in FIG. 7, an opening 330 is typically formed in the central area of the current collecting member so that the electrolyte can wet the electrode assembly through the opening 330. In some embodiments, a first connecting portion (not shown) used to be connected to an electrode lead-out part is also arranged in the central area of the current collecting member. In the present embodiment, the avoidance groove 3322A at the innermost circle is close to the central area of the current collecting member 33. The sub-tab passing through the avoidance groove 3322A at the innermost circle is folded outward to avoid the interference between the sub-tab and the opening 330 in the central area of the current collecting member, thereby avoiding affecting the wetting of the electrolyte. In addition, the sub-tab is prevented from interfering with the welding of the first connecting portion to the electrode lead-out part, and the sub-tab is prevented from being burned when the first connecting portion is welded to the electrode lead-out part, thereby avoiding a decrease in the current flow area.

As shown in FIG. 7, according to some embodiments of the present application, at least a portion of the sub-tab 3221B passes through the avoidance groove 3322B at the outermost circle of the current collecting member and is folded towards the inner circle, so as to be close to the sub-conducting portion 3321B adjacent to the avoidance groove 3322B at the outermost circle.

The avoidance groove 3322B at the outermost circle refers to the avoidance groove with the largest radius of the circle where the avoidance groove is located along the radial direction of the current collecting member, and may also be referred to as the avoidance groove furthest to the center of the current collecting member 33. Folding towards the inner circle means bending towards the center direction of the current collecting member.

Exemplarily, after passing through the avoidance groove 3322B at the outermost circle and being folded, the sub-tab 3221B can be directly connected to the adjacent sub-conducting portion 3321B, e.g., by welding.

Or, in some embodiments, the sub-conducting portion 3321B adjacent to the avoidance groove 3322B at the outermost circle may be provided with a folded edge at the outer edge, and the sub-tab 3221B is welded to the folded edge after passing through the avoidance groove 3322B at the outermost circle, and is folded towards the inner circle together with the folded edge, so as to fit onto the sub-conducting portion 3321B where the folded edge is located.

The outer circumference of the current collecting member is relatively large, and the dimension of the electrode plate winding along the outer circumference of the current collecting member is relatively long. In the present embodiment, an avoidance groove is arranged at the outermost circle of the current collecting member, so that the sub-tab of the electrode plate on the circumference of the outer circle can pass through the avoidance groove at the outermost circle and be connected to the sub-conducting portion. Thus, it can be ensured that the electrode plate is provided with the sub-tab connected to the current collecting member on the circumference of the outer circle, thereby avoiding excessive polarization and resistance of the electrode plate, making the conduction between a tab part of the electrode plate and the current collecting member more uniform, and improving the conduction efficiency.

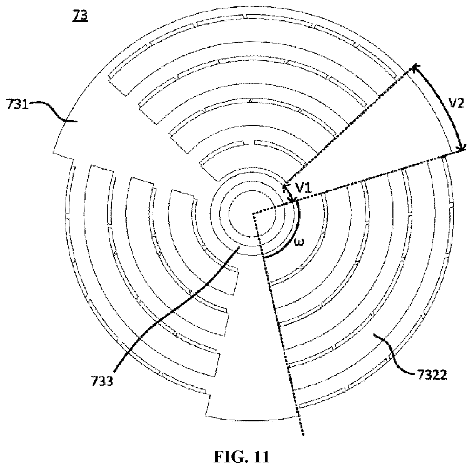

FIG. 11 is a schematic structural diagram of a current collecting member 73 of a battery cell provided according to other embodiments according to the present disclosure. As shown in FIG. 11, according to some embodiments of the present application, the current collecting member 73 includes a first connecting portion 733. The converging portions 731 are electrically connected to the electrode lead-out part through the first connecting portion 733. The converging portions 731 and the conducting portions are arranged around the first connecting portion 733. The current collecting member 73 converges along the converging portion 731 towards the first connecting portion 733 in the central area. The converging portions 731 and the conducting portions are arranged on the outer peripheral side of the first connecting portion 733, which can facilitate the connection of the first connecting portion 733 to the electrode lead-out part and assembly, and the structure is simple.

According to some embodiments of the present application, taking FIG. 3, FIG. 4, and FIG. 5 as examples, the shell assembly 21 includes a shell. The shell includes a case 211 and an end cover 212 in sealed fit. An electrode lead-out part is arranged in a manner of protruding from the shell. Exemplarily, the case 211 includes a bottom wall at one end away from the end cover 212, and the electrode lead-out part is an electrode terminal 213 mounted on the bottom wall of the case 211 and protruding from the outside of the case 211. According to the present embodiment, the first connecting portion 733 of the current collecting member 73 may be welded to a portion of the electrode lead-out part (electrode terminal 213) located in the case 211 to achieve input and output of electric energy. In the battery cell 20 of such a structure, the electrode lead-out part (electrode terminal 213) is mounted on the case 211 in an insulated manner, that is, there is no electrical conduction between the electrode lead-out part (electrode terminal 213) and the case 211. Exemplarily, referring to FIG. 3, FIG. 4, and FIG. 5, the electrode lead-out part (electrode terminal 213) is riveted to the bottom wall of the case 211. The shell assembly 21 may also include an insulating plastic 214, and the insulating plastic 214 is arranged between the case 211 and the electrode lead-out part (electrode terminal 213) to insulate the electrode lead-out part from the case 211, so that the electrode lead-out part (electrode terminal 5213) is mounted on the case 211 in an insulated manner.

The electrode lead-out part that is at least partially protruding from the outside of the shell is arranged on the shell, which can facilitate the connection of the electrode lead-out part to the first connecting portion of the current collecting member, and also facilitate the input or output of electric energy through the electrode lead-out part.

According to some embodiments of the present application, as shown in FIG. 11, the converging portions 731 extend along the radial direction of the current collecting member 73, and one end of each converging portion 731 is connected to the first connecting portion 733. The width v1 of the ends of the converging portions 731 connected to the first connecting portion 733 and the width v2 of the ends of the converging portions 731 away from the first connecting portion 733 satisfy: v1≥v2*0.3.

In the present embodiment, the current collecting member converges along the converging portions towards the first connecting portion in the central area. After extensive experimental analysis by the inventor of the present application, it was found that when the width v1 of the end of the converging portion connected to the first connecting portion and the width v2 of the end of the converging portion away from the first connecting portion satisfy v1≥v2*0.3, the width v1 of the end of the converging portion connected to the first connecting portion is sufficiently large, which can effectively improve the convergence efficiency.

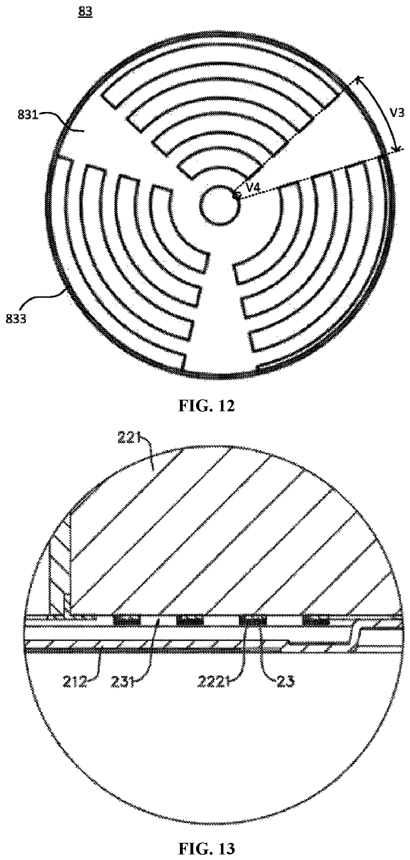

FIG. 12 is a schematic structural diagram of a current collecting member 83 of a battery cell provided according to other embodiments according to the present disclosure. FIG. 13 is a partial enlarged view of position B of the battery cell 20 shown in FIG. 4.

As shown in FIG. 12, according to some embodiments of the present application, a current collecting member 83 includes a second connecting portion 833. The converging portions 831 are electrically connected to the electrode lead-out part through the second connecting portion 833. The converging portions 831 and the conducting portions are at least partially arranged on the inner peripheral side of the second connecting portion 833 along the radial direction of the current collecting member 83. The current collecting member 83 converges along the converging portions 831 towards the second connecting portion 833 at the outer peripheral edge.

The second connecting portion is arranged at the outer peripheral edge of the current collecting member, which can facilitate the connection of the second connecting portion to the electrode lead-out part (a part of the shell), facilitate the assembly, and ensure the connection area between the second connecting portion and the shell.

According to some embodiments of the present application, taking FIG. 3, FIG. 4, and FIG. 13 as examples, the shell assembly 21 includes a shell. The shell includes a case 211 and an end cover 212 in sealed fit. An electrode lead-out part is a part of the shell. Optionally, the electrode lead-out part may be the end cover 212. According to the present embodiment, the second connecting portion 833 of the current collecting member 83 may be welded to the end cover 212 to achieve input and output of electric energy. In other embodiments, the second connecting portion 232 may also be abutted against the end cover 212. Of course, in other embodiments, the battery cell may also have other structures. For example, the electrode lead-out part may also be the bottom wall of one end of the case 211 away from the end cover 212.

A part of the shell is used as the electrode lead-out part, which can facilitate the connection of the electrode lead-out part to the second connecting portion of the current collecting member, and can also facilitate the input or output of electric energy.

According to some embodiments of the present application, the converging portions 831 extend along the radial direction of the current collecting member 83. The width v3 of the end of the converging portion 831 connected to the second connecting portion 833 and the width v4 of the end of the converging portion 831 away from the second connecting portion 833 satisfy: v4≤v3*0.3.

In the present embodiment, the current collecting member converges along the converging portions towards the second connecting portion at the peripheral edge. After extensive experimental analysis by the inventors of the present application, it was found that when the width v3 of the end of the converging portion connected to the second connecting portion and the width v4 of the end of the converging portion away from the second connecting portion satisfy v4≤v3*0.3, the width v3 of the end of the converging portion connected to the second connecting portion is sufficiently large, which can effectively improve the convergence efficiency.

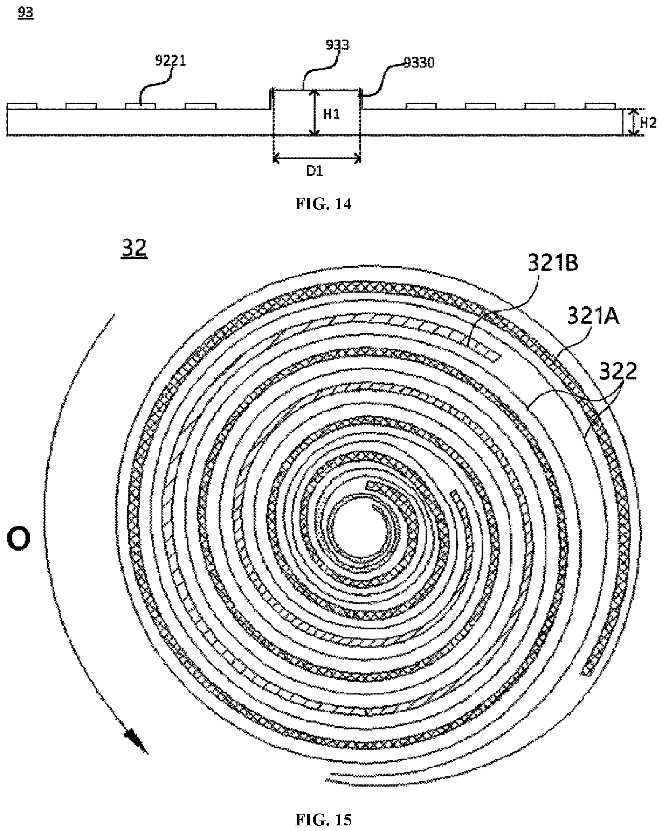

FIG. 14 is cross-sectional schematic structural diagram of a current collecting member 93 of a battery cell provided according to other embodiments of the present disclosure. As shown in FIG. 14, according to some embodiments of the present application, the current collecting member 93 includes a first connecting portion 933, that is, the current collecting member 93 converges along converging portions towards the first connecting portion 933 in the central area, and is connected to an electrode lead-out part through the first connecting portion 933. The side of the first connecting portion 933 away from the main body part of the electrode assembly is raised relative to the conducting portions. The height of the raised portion is greater than the height of sub-tabs 9221 located on the side of the current collecting member 93 away from the main body part. In other words, the side of the first connecting portion away from the main body part protrudes from the conducting portions and the sub-tabs 9221 connected to the conducting portions.

The side of the first connecting portion away from the main body part of the electrode assembly is used to be connected with the electrode lead-out part. The side of the first connecting portion away from the main body part of the electrode assembly is raised so that the first connecting portion is higher than the portions of the sub-tabs passing through avoidance grooves. Thus, the sub-tabs can be prevented from affecting the connection of the first connecting portion to the electrode lead-out part, and the connection operation, e.g., welding operation, is facilitated.

As shown in FIG. 14, according to some embodiments of the present application, the current collecting member 93 includes a first connecting portion 933, that is, the current collecting member 93 is connected to the electrode lead-out part through the first connecting portion 933. The thickness H1 of the first connecting portion 933 is greater than the thicknesses H2 of other portions of the current collecting member 93. The other portions include the conducting portions and the converging portions.

The first connecting portion is used to be connected with the electrode lead-out part, and the thickness of the first connecting portion is greater than the thicknesses of the other portions, which can increase the current flow density between the first connecting portion and the electrode lead-out part, and further improves the conduction efficiency.

For example, as shown in FIG. 13, the side of the first connecting portion 933 away from the main body part is raised relative to the other portions of the current collecting member, so that the thickness of the first connecting portion 933 is greater than the height of the other portions. Thus, the current flow density between the first connecting portion 933 and the electrode lead-out part can be increased, and further the flow conduction efficiency can be improved. The first connecting portion 933 can be made higher than the portions of the sub-tabs passing through the avoidance grooves, which can facilitate the operation of connecting the first connecting portion 933 to the electrode lead-out part.

Referring to FIG. 6, according to some embodiments of the present application, the number x of the converging portions 231 of the current collecting member 23 satisfies: 3≤x≤5.

Exemplarily, the current collecting member 23 is provided with three converging portions 231 and three conducting portions 232, and the three converging portions 231 and the three conducting portions 232 are alternately arranged along the circumferential direction of the current collecting member 23. Of course, in other embodiments, the number of the converging portions 231 may also be 2, 4, 5, 6, or the like.

When the number x of the converging portions 231 is greater than 5, the number of the converging portions 231 is too large, which will result in a smaller distance between the converging portions 231, causing the dimension of the conducting portions 232 to be unable to tolerate misalignment of the sub-tabs 2221, easily crushing the sub-tabs 2221, and causing insufficient conduction area. If x<2, the number of the converging portions 231 is too small, which easily results in insufficient overall strength of the current collecting member 23. After extensive experimental analysis by the inventors of the present application, it was found that when the number x of the converging portions 231 is 3 to 5, the conduction area and conduction uniformity can be ensured, and the strength of the entire current collecting member 23 can be ensured, thereby ensuring the stability of connection among the current collecting member 23, a tab part, and the electrode lead-out part.

As shown in FIG. 11, according to some embodiments of the present application, the central angle ω corresponding to the arc length of each avoidance groove 7322 satisfies: 60°≤ω≤100°. It can be understood that the avoidance grooves 7322 extend along the circumferential direction of the current collecting member 73 and are roughly in the shape of an arc. The central angle corresponding to the arc is the central angle ω corresponding to the arc length of the avoidance groove 7322.

The avoidance grooves 7322 are used for the sub-tabs to pass through. If ω≤60°, the central angle ω corresponding to the arc length of the avoidance groove 7322 is too small, which is not conducive to the passage of the sub-tabs. If ω≥100°, the central angle ω corresponding to the arc length of the avoidance groove 7322 is too large, which results in too few converging portions 731 and/or too small width of the converging portions 731, and can easily lead to too small convergence area, poor conduction uniformity, and insufficient overall strength of the current collecting member 73. After extensive experimental analysis by the inventors of the present application, it was found that when 60°≤ω≤100°, a certain misalignment space can be reserved for the insertion operation between the sub-tabs and the current collecting member 73, which facilitates the passage of the sub-tabs. Also, the overall strength of the current collecting member 73 is high, and the number and/or width of the converging portions 731 can meet the conduction requirements and is conducive to improving the conduction efficiency.

According to some embodiments of the present application, the ratio of the total length of the avoidance grooves of each conducting portion along the radial direction of the current collecting member to the radius of the current collecting member satisfies: ratio≤60%.

In the present embodiment, the total length of the avoidance grooves of each conducting portion along the radial direction of the current collecting member refers to the sum of the lengths of all the avoidance grooves of the conducting portion along a certain radial direction of the current collecting member.

Specifically, each conducting portion includes sub-conducting portions and avoidance grooves. The ratio of the total length of the avoidance grooves along the radial direction of the current collecting member to the radial length reflects the dimensional ratio of the avoidance grooves to the conducting portion. If the ratio is too large, the dimensions of the avoidance grooves are too large and the dimensions of the sub-conducting portion are too small, which is not conducive to the operation of connecting the sub-tabs to the sub-conducting portions on the one hand, and will lead to insufficient strength of the current collecting member on the other hand. After extensive experimental analysis by the inventors of the present application, it was found that when ratio≤60%, the dimensional ratios of the avoidance grooves and the sub-conducting portions to the conducting portion are appropriate, which is conducive to ensuring the dimensions of the sub-conducting portions, facilitating the operation of connecting the sub-tabs to the sub-conducting portions, and ensuring the strength of the current collecting member.

According to some embodiments of the present application, the current collecting member is welded to the electrode lead-out part, and the weld mark is annular. The capacity C (Ah) of the battery cell satisfies: 15≤π*D1*t1/(C*K)≤50, where D1 is the diameter of the annular weld mark, t1 is the thickness of the welding area of the current collecting member, and K is the metal current carrying factor of the current collecting member. Specifically, K=ρ1/(A*p), where ρ is the resistivity of the current collecting member, A is the specific heat capacity of the current collecting member, and p is the density of the current collecting member. K can be calculated by substituting measured parameters into the above formula. The smaller the K value, the stronger the current carrying capacity, and the larger the K value, the weaker the current carrying capacity. For example, the metal carrier factor K of copper is 0.0050 Ω·mm^4·°C/J, the metal current carrying factor K of aluminum is 0.0120 Ω·mm^4·°C/J, and the metal current carrying factor K of nickel is equal to 0.0167 Ω·mm^4·°C/J. Any of these metals can be selected to make current collecting members according to needs.

For example, in some embodiments, as shown in FIG. 14, the current collecting member 93 includes a first connecting portion 933 located in the central area, the current collecting member 93 is welded to the electrode lead-out part through the first connecting portion 933, and the weld mark 9330 is annular. In this case, D1 is the diameter of the annular weld mark 9330 between the first connecting portion 933 and the electrode lead-out part, and t1 is the thickness of the first connecting portion 933. In FIG. 14, t1=H1.

Or, in other embodiments, the current collecting member includes a second connecting portion located at the outer peripheral edge, the current collecting member is welded to the electrode lead-out part through the second connecting portion, and the welding mark is annular. In this case, D1 is the diameter of the annular weld mark between the second connecting portion and the electrode lead-out part, and t1 is the thickness of the second connecting portion.

After extensive experimental analysis by the inventors of the present application, it was found that when π*D1*t1/(C*K)<15, the current flow capacity is insufficient, and the temperature is too high during fast charging, which affects the battery life and even safety. When π*D1*t1/(C*K)>50, the current flow capacity is sufficient, but the volume of the current collecting member is too large, which reduces the battery capacity. Also, because the diameter of the annular weld mark is too large, an electrode plate at the inner circle is not provided with sub-tabs, and when the current collecting member converges to the center, the internal resistance is too large. When the capacity C (Ah) of the battery cell satisfies 15≤π*D1*t1/(C*K)≤50, a sufficient current flow capacity can be ensured, the battery capacity can be improved, and the problem of excessive internal resistance when the current collecting member converges towards the center can be avoided.

In some embodiments, the capacity C (Ah) of the battery cell satisfies: 19≤π*D1*t1/(C*K)≤40. After extensive experimental analysis by the inventors of the present application, it was found that when C(Ah) satisfies 19≤π*D1*t1/(C*K)≤40, the current flow capacity and the battery capacity can be better balanced, and the internal resistance when the current collecting member converges towards the center can be reduced.

According to some embodiments of the present application, the minimum thickness t2 of the current collecting member and the diameter D of the current collecting member satisfy: 0.008≤t2/D≤0.02.

In some embodiments, the thicknesses of all portions of the current collecting member 93 may be the same or different. Taking FIG. 14 as an example, the thickness of the first connecting portion 933 of the current collecting member 93 is greater than the thicknesses of other portions, and the thicknesses of the other portions are equal. At this time, the minimum thickness t2 of the current collecting member is equal to the thicknesses H2 of the other portions.

When t2/D<0.008, the thickness of the current collecting member is insufficient and the current collecting member is prone to deformation. When t2/D>0.02, the thickness of the current collecting member is too large, which affects the battery capacity and causes the battery capacity to be too small. After extensive experimental analysis by the inventors of the present application, it was found that when the thickness t2 of the current collecting member and the diameter D of the current collecting member satisfy 0.008≤t2/D≤0.02, the hardness of the current collecting member can be ensured, the current collecting member can be prevented from deformation and poor welding when being welded to a tab part, and a large battery capacity can be achieved.

In some embodiments, the minimum thickness t2 of the current collecting member and the diameter D of the current collecting member satisfy: 0.0089≤t2/D≤0.0134. After extensive experimental analysis by the inventors of the present application, it was found that when 0.0089≤t2/D≤0.0134, the thickness of the current collecting member and the battery capacity can be better balanced.

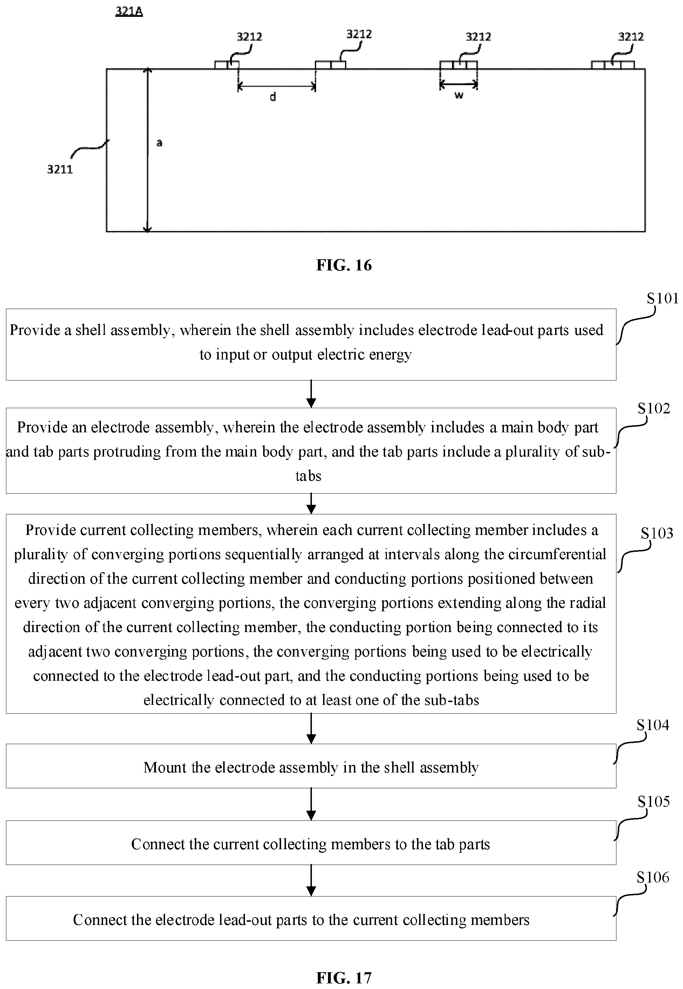

FIG. 15 is a schematic structural diagram of an electrode assembly 32 of a battery cell provided according to some embodiments of the present disclosure. FIG. 16 is a schematic structural diagram of an electrode plate 321A of a battery cell provided according to some embodiments of the present disclosure. As shown in FIG. 15, according to some embodiments of the present application, the electrode assembly 32 is of a wound structure formed by electrode plates 321A and 321B and a separator 322. The electrode plates include a positive electrode plate and a negative electrode plate. Taking 321A as the positive electrode plate and 321B as the negative electrode plate as an example, the positive electrode plate 321A and the negative electrode plate 321B respectively include: a current collector substrate, an active material layer arranged on the surface of the current collector substrate, and a tab part connected to a side edge of the current collector substrate extending along the winding direction O. The separator 322 and the electrode plates 321A and 321B except the tab parts form the main body part of the electrode assembly 32. The tab part of the electrode plates 321A and 321B forms the tab part of the electrode assembly after winding.

dτ = (100 Ω·(mm)^2×b)/(ρ2×a) is set, where b is the thickness of the current collector substrate, ρ2 is the resistivity of the current collector substrate, and a is the width of the electrode plate. At least one of the positive electrode plate and the negative electrode plate satisfies the following condition: along the winding direction, the distance d between any two sub-tabs in the electrode plate satisfies d≤dτ. For example, taking the electrode plate 321A shown in FIG. 16 as an example, the width of the electrode plate 321A is a, the electrode plate 321A includes a current collector substrate 3211 and a tab part, and the tab part includes a plurality of sub-tabs 3212. The thickness of the current collector substrate 3211 is b, and the resistivity is ρ2, then dτ = (100 Ω·(mm)^2×b)/(ρ2×a). The distance d between any two sub-tabs 3212 satisfies d≤dτ.

The distance d between any two sub-tabs reflects the distribution density of the sub-tabs. When d>dτ, the distribution density of the sub-tabs is low, the current flow capacity of the tab part is insufficient, and the temperature at the tab part and the internal resistance of the battery are too high. In the present embodiment, when d≤dτ, the current flow capacity of the tab part can be improved, the internal resistance of the battery can be reduced, and the battery performance can be improved.

According to some embodiments of the present application, as shown in FIG. 16, the width of a sub-tab is w. Along the winding direction O of the wound structure, the number of the sub-tabs of the electrode plate within any distance dτ is n, and the electrode plate satisfies: 0.05≤n*w/dτ≤0.5. n*w/dτ reflects the distribution area of the sub-tabs.

After experimental analysis by the inventors of the present application, it was found that when n*w/dτ<0.05, the distribution area of the sub-tabs is small, the current flow capacity of the tab part is insufficient, and the temperature at the tab part and the internal resistance of the battery are too high. When n*w/dτ>0.5, the number or width of the sub-tabs is too large, and the difficulty is increased for manufacturing. If there is misalignment of the sub-tabs during winding, the sub-tabs easily interfere with the current collecting member, so that the sub-tabs cannot extend from the avoidance grooves, and safety problems such as folds and damage of tabs and insertion of the tabs are raised. In the present embodiment, the tab part of the electrode plate is designed to satisfy 0.05≤n*w/dτ≤0.5, which can avoid the above problems, improve the current flow capacity, reduce the internal resistance of the battery, and improve the battery performance.

FIG. 17 is a flowchart of a method for manufacturing a battery cell provided according to some embodiments of the present disclosure. According to some embodiments of the present disclosure, a method for manufacturing a battery cell is further provided. As shown in FIG. 17, the method includes the following steps:
S101: a shell assembly is provided, wherein the shell assembly includes electrode lead-out parts used to input or output electric energy;
S102: an electrode assembly is provided, wherein the electrode assembly includes a main body part and tab parts protruding from the main body part, and the tab part includes a plurality of sub-tabs;
S103: a current collecting member is provided, wherein the current collecting member includes a plurality of converging portions sequentially arranged at intervals along the circumferential direction of the current collecting member and the conducting portions positioned between every two adjacent converging portions, the converging portions extend along the radial direction of the current collecting member, the conducting portion is connected to its adjacent two converging portions, the converging portions are used to be electrically connected to the electrode lead-out part, and the conducting portions are used to be electrically connected to at least one of the sub-tabs;
S104: the electrode assembly is mounted in the shell assembly;
S105: the current collecting members are connected to the tab parts; and
S106: the electrode lead-out parts are connected to the current collecting members.

The method for manufacturing a battery cell according to the embodiments of the present disclosure can, on the one hand, strengthen the structural strength of the entire current collecting member, avoid deformation or damage of the current collecting member under stress, ensure the pass rate of connection among the current collecting member, the tab part and the electrode lead-out part, ensure the reliability of the battery cell in use, and prolong the service life of the battery cell, and on the other hand, improve the uniformity and efficiency of conduction from the current collecting member to the electrode lead-out part, thereby alleviating the problem of temperature rise of the battery cell due to excessive local current flow, reducing the safety hazards of the battery cell in the later use process, and ensuring the safety of consumers. In addition, the manufacturing method can also improve the conduction efficiency and improve the battery performance.

According to some embodiments of the present disclosure, as shown in FIG. 6, the conducting portion 232 includes avoidance grooves 2322 and sub-conducting portions 2321 alternately arranged along the radial direction of the current collecting member. The avoidance grooves 2322 and the sub-conducting portions 2321 extend along the circumferential direction of the current collecting member respectively. The two ends of every sub-conducting portion 2321 in the conducting portion 232 are connected to the two converging portions 231 adjacent to the conducting portion 232 respectively. The avoidance grooves 2322 are used to allow at least one sub-tab 2221 to pass through. In addition, as shown in FIG. 8, in some embodiments, the edge of each sub-conducting portion 4321 is provided with a folded edge 4324 on the side away from the main body part. In S105, the current collecting members are connected to the tab parts, and further, as shown in FIG. 9, the portion of at least one sub-tab 5221 passing through the avoidance groove 5322 is welded to the folded edge 5323, and the welded sub-tab 5221 and folded edge 5323 are folded in a direction close to or away from the sub-conducting portion 5321 to which the folded edge 5323 is connected.

The arrangement of the folded edges can further facilitate the connection of the tab parts to the current collecting members, further improve the pass rate and reliability of connection, and improve the efficiency and uniformity of conduction.

In addition, according to some embodiments of the battery cell provided in the embodiments of the present disclosure and the beneficial effects that can be brought about, the method for manufacturing a battery cell in the embodiments of the present disclosure also has the same or similar embodiments and beneficial effects, and the descriptions thereof are omitted herein.

According to some embodiments of the present disclosure, a battery is further provided, and the battery 100 includes the battery cell in any of the aforementioned embodiments. As shown in FIG. 2, the battery 100 includes a plurality of battery cells 20, where at least one battery cell 20 is a battery cell in any of the aforementioned embodiments. The battery 100 using the aforementioned battery cell has better performance, e.g., higher safety and higher product yield.

As shown in FIG. 1, according to some embodiments of the present disclosure, an electrical apparatus 1000 is further provided, including the battery 100 in any of the aforementioned embodiments.

The electrical apparatus may be any of the aforementioned electrical apparatuses that need to use a battery, e.g., an electrical device or an energy storage device. For example, the electrical apparatus in FIG. 1 is a vehicle. The electrical apparatus using the aforementioned battery has better performance, e.g., higher safety and reliability.

As shown in FIG. 8, the battery cell provided in some embodiments of the present disclosure includes a current collecting member 43. The current collecting member 43 includes converging portions 431 and conducting portions. The converging portions 431 and the conducting portions are alternately arranged along the circumferential direction of the current collecting member 43. Each conducting portion is connected to two adjacent converging portions 431 respectively. The conducting portion includes avoidance grooves 4322 and sub-conducting portions 4321 alternately arranged along the radial direction of the current collecting member 43. The edge of each sub-conducting portion 4321 is provided with a folded edge 4323 on the side away from the main body part of the electrode assembly. Each folded edge 4323 includes a plurality of comb-tooth portions 4324 arranged at intervals. The portions of sub-tabs of the electrode assembly passing through the avoidance grooves 4322 are welded to the folded edges 4323 and are bent together with the folded edges 4323 to be close to the sub-conducting portions 4321 where the folded edges 4323 are located.

Finally, it should be noted that the above embodiments are only used to explain the technical solution of the present application, and not to limit the present application. Although the present application has been described in detail with reference to the aforementioned embodiments, those of ordinary skill in the art should understand that the technical solutions described in the aforementioned embodiments can still be modified, or some or all of the technical features can be equivalently replaced. The modifications or replacements do not deviate the nature of the corresponding technical solutions from the scope of the embodiments of the present application, and should all be included in the scope of the claims and specification of the present application. In particular, the technical features mentioned in the embodiments can be combined in any manner as long as there is no structural conflict. The present application is not limited to the specific embodiments disclosed herein, but rather includes all technical solutions falling within the scope of the claims.

## Claims

1. A battery cell, comprising:
a shell assembly, comprising electrode lead-out parts used to input or output electric energy;
an electrode assembly, accommodated in the shell assembly, the electrode assembly comprising a main body part and tab parts protruding from an end of the main body part, and the tab parts comprising a plurality of sub-tabs; and
current collecting members, accommodated in the shell assembly, each current collecting member comprising a plurality of converging portions sequentially arranged at intervals along the circumferential direction of the current collecting member and conducting portions positioned between every two adjacent converging portions, the converging portions extending along the radial direction of the current collecting member, the conducting portion being connected to its adjacent two converging portions, the converging portions being used to be electrically connected to the electrode lead-out part, and the conducting portions being used to be electrically connected to at least one of the sub-tabs.

2. The battery cell according to claim 1, wherein the conducting portion comprises avoidance grooves and sub-conducting portions alternately arranged along the radial direction of the current collecting member, the avoidance grooves and the sub-conducting portions extend along the circumferential direction of the current collecting member respectively, the two ends of every sub-conducting portion in the conducting portion are connected to the two converging portions adjacent to the conducting portion respectively, and the avoidance grooves are used to allow at least one sub-tab to pass through.

3. The battery cell according to claim 2, wherein the sub-tab passing through from each avoidance groove is folded towards the sub-conducting portion adjacent to the avoidance groove and is connected to the sub-conducting portion.

4. The battery cell according to claim 3, wherein the sub-tabs passing through from two adjacent avoidance grooves are connected to the sub-conducting portion between the two adjacent avoidance grooves respectively.

5. The battery cell according to claim 3, wherein the sub-tabs passing through from different avoidance grooves are connected to different sub-conducting portions respectively.

6. The battery cell according to any one of claims 2 to 5, wherein each conducting portion comprises 3 to 5 avoidance grooves.

7. The battery cell according to any one of claims 2 to 6, wherein the edge of each sub-conducting portion is provided with a folded edge on a side away from the main body part, and the portion of the sub-tab passing through the avoidance groove is connected to the folded edge.

8. The battery cell according to claim 7, wherein the folded edge provided on each sub-conducting portion is capable of being folded in a direction close to or away from the sub-conducting portion.

9. The battery cell according to claim 7 or 8, wherein the folded edge comprises a plurality of comb-teeth portions, and along the circumferential direction of the current collecting member, the width Hc of each comb-teeth portion and the diameter D of the current collecting member satisfy: 0.08≤Hc/D≤0.2.

10. The battery cell according to claim 9, wherein the plurality of comb-teeth portions have an equal width.

11. The battery cell according to any one of claims 2 to 10, wherein the current collecting member comprises a plurality of conducting portions, and the plurality of conducting portions are arranged along the circumferential direction of the current collecting member.

12. The battery cell according to claim 11, wherein the plurality of converging portions and the plurality of conducting portions are alternately arranged along the circumferential direction of the current collecting member.

13. The battery cell according to claim 12, wherein the projection of the inner wall of any one avoidance groove in one conducting portion and the projection of the inner wall of any one avoidance groove in another conducting portion are located on different circles; or
the projection of the outer wall of any avoidance groove in one conducting portion and the projection of the outer wall of any avoidance groove in another conducting portion are located on different circles.

14. The battery cell according to claim 13, wherein the circles where the projections of the inner walls of the avoidance grooves of the plurality of conducting portions are located are alternately arranged in sequence along the radial direction of the current collecting member; or
the circles where the projections of the outer walls of the avoidance grooves of the plurality of conducting portions are located are alternately arranged in sequence along the radial direction of the current collecting member.

15. The battery cell according to claim 13 or 14, wherein
the radii of the circles where the projections of the inner walls of all the avoidance grooves of the current collecting member are located are arranged in ascending order, and based on the order, the increment of the radius corresponding to each avoidance groove relative to the radius corresponding to its previous avoidance groove gradually decreases; or
the radii of the circles where the projections of the outer walls of all the avoidance grooves of the current collecting member are located are arranged in ascending order, and based on the order, the increment of the radius corresponding to each avoidance groove relative to the radius corresponding to its previous avoidance groove gradually decreases.

16. The battery cell according to any one of claims 12 to 15, wherein
the sub-tab passing through the avoidance groove at the innermost circle of the current collecting member is folded towards the outer circle, so as to be close to the sub-conducting portion adjacent to the avoidance groove at the innermost circle.

17. The battery cell according to any one of claims 12 to 16, wherein at least a portion of the sub-tab passes through the avoidance groove at the outermost circle of the current collecting member and is folded towards the inner circle, so as to be close to the sub-conducting portion adjacent to the avoidance groove at the outermost circle.

18. The battery cell according to any one of claims 12 to 17, wherein the current collecting member further comprises a first connecting portion; the converging portions are electrically connected to the electrode lead-out part through the first connecting portion; and
the converging portions and the conducting portions are arranged around the first connecting portion.

19. The battery cell according to claim 18, wherein one end of each converging portion is connected to the first connecting portion, and the width v1 of the end of the converging portion connected to the first connecting portion and the width v2 of the end of the converging portion away from the first connecting portion satisfy: v1≥v2*0.3.

20. The battery cell according to claim 18 or 19, wherein the shell assembly comprises a shell, the shell is used to accommodate the electrode assembly, and the electrode lead-out part is arranged in a manner of protruding from the shell.

21. The battery cell according to any one of claims 12 to 17, wherein the current collecting member further comprises a second connecting portion, and the second connecting portion is used to be connected to the electrode lead-out part; and
the converging portions and the conducting portions are at least partially arranged on the inner peripheral side of the second connecting portion along the radial direction of the current collecting member.

22. The battery cell according to claim 21, wherein the width v3 of the end of the converging portion connected to the second connecting portion and the width v4 of the end of the converging portion away from the second connecting portion satisfy: v4≤v3*0.3.

23. The battery cell according to claim 21 or 22, wherein the shell assembly comprises a shell, the shell is used to accommodate the electrode assembly, and the electrode lead-out part is a part of the shell.

24. The battery cell according to any one of claims 18 to 20, wherein the side of the first connecting portion away from the main body part protrudes from the conducting portions and the sub-tabs.

25. The battery cell according to any one of claims 18 to 20 and 24, wherein the thickness of the first connecting portion is greater than the thicknesses of other portions of the current collecting member.

26. The battery cell according to any one of claims 18 to 25, wherein the current collecting member is welded to the electrode lead-out part, and the weld mark is annular; and
the capacity C (Ah) of the battery cell satisfies: 15≤π*D1*t1/(C*K)≤50,
where D1 is the diameter of the annular weld mark, t1 is the thickness of the welding area of the current collecting member, and K is the metal current carrying factor of the current collecting member.

27. The battery cell according to claim 26, wherein the capacity C (Ah) of the battery cell satisfies: 19≤π*D1*t1/(C*K)≤40.

28. The battery cell according to any one of claims 12 to 27, wherein the number x of the converging portions satisfies: 3≤x≤5.

29. The battery cell according to any one of claims 12 to 27, wherein the central angle ω corresponding to the arc length of each avoidance groove satisfies: 60°≤ω≤100°.

30. The battery cell according to any one of claims 12 to 29, wherein the ratio of the total length of the avoidance grooves of each conducting portion along the radial direction of the current collecting member to the radius of the current collecting member satisfies: ratio≤60%.

31. The battery cell according to any one of claims 12 to 30, wherein the minimum thickness t2 of the current collecting member and the diameter D of the current collecting member satisfy: 0.008≤t2/D≤0.02.

32. The battery cell according to claim 31, wherein the minimum thickness t2 of the current collecting member and the diameter D of the current collecting member satisfy: 0.0089≤t2/D≤0.0134.

33. The battery cell according to any one of claims 1 to 32, wherein the electrode assembly is of a wound structure formed by electrode plates and a separator;
the electrode plate comprises: a current collector substrate, an active material layer arranged on the surface of the current collector substrate, and a tab part connected to a side edge of the current collector substrate extending along the winding direction;
the separator and the electrode plates except the tab parts form the main body part of the electrode assembly;
dτ=(100 Ω·(mm)^2×b)/(ρ×a) is set; and along the winding direction, the distance d between any two sub-tabs in the electrode plate satisfies d≤dτ,
where b is the thickness of the current collector substrate, ρ is the resistivity of the current collector substrate, and a is the width of the electrode plate.

34. The battery cell according to claim 33, wherein the width of the sub-tab is w; along the winding direction, the number of the sub-tabs of the electrode plate within any distance dτ is n; and the electrode plate satisfies: 0.05≤n*w/dτ≤0.5.

35. A method for manufacturing a battery cell, comprising:
providing a shell assembly, the shell assembly comprising electrode lead-out parts used to input or output electric energy;
providing an electrode assembly, the electrode assembly comprising a main body part and tab parts protruding from the main body part, and the tab parts comprising a plurality of sub-tabs;
providing current collecting members, each current collecting member comprising a plurality of converging portions sequentially arranged at intervals along the circumferential direction of the current collecting member and conducting portions positioned between every two adjacent converging portions, the converging portions extending along the radial direction of the current collecting member, the conducting portion being connected to its adjacent two converging portions, the converging portions being used to be electrically connected to the electrode lead-out part, and the conducting portions being used to be electrically connected to at least one of the sub-tabs;
mounting the electrode assembly in the shell assembly;
connecting the current collecting members to the tab parts; and
connecting the electrode lead-out parts to the current collecting members.

36. The method for manufacturing a battery cell according to claim 35, wherein the conducting portion comprises avoidance grooves and sub-conducting portions alternately arranged along the radial direction of the current collecting member, the avoidance grooves and the sub-conducting portions extend along the circumferential direction of the current collecting member respectively, the two ends of every sub-conducting portion in the conducting portion are connected to the two converging portions adjacent to the conducting portion respectively, and the avoidance grooves are used to allow at least one sub-tab to pass through;
the edge of each sub-conducting portion is provided with a folded edge on the side away from the main body part; and
the step of connecting the current collecting members to the tab parts further comprises:
allowing the at least one sub-tab to pass through the avoidance groove and be welded to the folded edge, and folding the welded sub-tab and folded edge in a direction close to or away from the sub-conducting portion to which the folded edge is connected.

37. A battery, comprising the battery cell according to any one of claims 1 to 34.

38. An electrical apparatus, comprising the battery according to claim 37.
